# EUROPEAN PATENT APPLICATION

(11) **EP 4 746 526 A1**
(43) Date of publication of application: **20.05.2026**
(21) Application number: 23944711.3
(22) Date of filing: 12.07.2023
(51) Int. Cl.: H04W 48/16

(54) **INFORMATION PROCESSING METHOD, AND NETWORK ELEMENT, COMMUNICATION DEVICE, COMMUNICATION SYSTEM AND STORAGE MEDIUM**

(71) Applicant: Beijing Xiaomi Mobile Software Co., Ltd., Beijing 100085 (CN)
(72) Inventor: WU, Jinhua, Beijing 100085 (CN); SHEN, Yang, Beijing 100085 (CN)
(74) Representative: Stöckeler, Ferdinand
(86) International application number: PCT/CN2023/107095
(87) International publication number: WO 2025/010691

(57) **Abstract**

Provided in the embodiments of the present disclosure are an information processing method, and a network element, a communication device, a communication system and a storage medium. The information processing method, which is executed by a first network element, comprises: sending first information to a second network element, wherein the first information is used for instructing the second network element to execute network slice admission control (NSAC) on a terminal, which requests registration, or a data packet unit (PDU) session, which requests activation, wherein the first information comprises a group identifier (Group ID) associated with the terminal or the PDU session.

## Description

### TECHNICAL FIELD

The disclosure relates to the field of communication technologies, and in particular to an information processing method, a network element, a communication device, a communication system and a storage medium.

### BACKGROUND

Mobile media services, extended reality (XR) services such as cloud-based augmented reality (AR) or virtual reality (VR), cloud gaming, and video-based machine or drone remote control services are expected to contribute increasingly higher traffic to communication networks (e.g., 5G networks).

In addition to audio and video streams, XR services also involve multimodal data streams, such as those from bio-tactile perception. The multimodal data is data input from the same device or different devices (including sensors) describing the same service or application, and may be output to one or more destination device terminals. The various data streams within multimodal data often exhibit certain or even strong correlations, such as synchronization of audio and video streams, or synchronization of tactile and visual data. For this type of media service, the data streams themselves, the interrelationships between them, and their demands on network transmission share some common characteristics. Effectively identifying and leveraging these characteristics will further enhance network and service transmission, control, as well as service assurance and user experience.

### SUMMARY

With the rapid development of communication technology, it is necessary to provide users with enhanced communication capabilities.

Embodiments of the present disclosure provide an information processing method, a network element, a communication device and a storage medium.

According to a first aspect of embodiments of the present disclosure, an information processing method is provided. The method is performed by a first network element, and includes:
sending first information to a second network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

According to a second aspect of embodiments of the present disclosure, an information processing method is provided. The method is performed by a second network element, and includes:
receiving first information sent by a first network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

According to a third aspect of embodiments of the present disclosure, an information processing method is provided. The method is performed by a third network element, and includes:
sending first information to a first network element, wherein the first information is configured to indicate a second network element to perform network slice admission control (NSAC) on a terminal requesting registration, and wherein the first information includes a group identifier associated with the terminal.

According to a fourth aspect of embodiments of the present disclosure, an information processing method is provided. The method is performed by a fourth network element, and includes:
sending first information to a first network element, wherein the first information is configured to indicate a second network element to perform network slice admission control (NSAC) on a packet data unit (PDU) session requesting activation, and wherein the first information includes a group identifier associated with the PDU session.

According to a fifth aspect of embodiments of the present disclosure, an information processing method is provided. The method is performed by a communication system, and includes:
sending first information, by a first network element, to a second network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

According to a sixth aspect of embodiments of the present disclosure, a first network element is provided. The first network element includes:
a sending module, configured to send first information to a second network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

According to a seventh aspect of embodiments of the present disclosure, a second network element is provided. The second network element includes:
a receiving module, configured to receive first information sent by a first network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

According to an eighth aspect of embodiments of the present disclosure, a third network element is provided. The third network element includes:
a sending module, configured to send first information to a first network element, wherein the first information is configured to indicate a second network element to perform network slice admission control (NSAC) on a terminal requesting registration, and wherein the first information includes a group identifier associated with the terminal.

According to a ninth aspect of embodiments of the present disclosure, a fourth network element is provided. The fourth network element includes:
a sending module, configured to send first information to a first network element, wherein the first information is configured to indicate a second network element to perform network slice admission control (NSAC) on a packet data unit (PDU) session requesting activation, and wherein the first information includes a group identifier associated with the PDU session.

According to a tenth aspect of embodiments of the present disclosure, a communication system is provided. The communication system includes a first network element, a second network element, a fourth network element, and a fourth network element. The first network element is configured to implement the information processing method provided in the first aspect, the second network element is configured to implement the information processing method provided in the second aspect, the third network element is configured to implement the information processing method provided in the third aspect, and the fourth network element is configured to implement the information processing method provided in the fourth aspect.

According to an eleventh aspect of embodiments of the present disclosure, a communication device is provided. The communication device includes:
one or more processors;
wherein the processor is configured to call instructions to cause the communication device to implement the information processing method provided in the first aspect, the second aspect, the third aspect or the fourth aspect.

According to a twelfth aspect of embodiments of the present disclosure, a storage medium is provided. The storage medium stores instructions that, when run on a communication device, cause the communication device to implement the information processing method provided in the first aspect, the second aspect, the third aspect or the fourth aspect.

It should be understood that the general description above and the detailed description in the following are merely exemplary and explanatory in nature and do not limit the embodiments of the present disclosure.

### BRIEF DESCRIPTION OF THE DRAWINGS

The accompanying drawings herein are incorporated into the description and form a part of this description, illustrating embodiments consistent with the present disclosure and used together with the description to explain the principles of the embodiments of the present disclosure.
FIG. 1a is a schematic diagram of an architecture of a communication system according to an illustrative embodiment.
FIG. 1b is a schematic diagram of an architecture of a 5G communication system according to an illustrative embodiment.
FIG. 2a is a schematic flowchart of an information processing method according to an illustrative embodiment.
FIG. 2b is a schematic flowchart of an information processing method according to an illustrative embodiment.
FIG. 2c is a schematic flowchart of an information processing method according to an illustrative embodiment.
FIG. 3a is a schematic flowchart of an information processing method according to an illustrative embodiment.
FIG. 3b is a schematic flowchart of an information processing method according to an illustrative embodiment.
FIG. 3c is a schematic flowchart of an information processing method according to an illustrative embodiment.
FIG. 3d is a schematic flowchart of an information processing method according to an illustrative embodiment.
FIG. 4a is a schematic flowchart of an information processing method according to an illustrative embodiment.
FIG. 4b is a schematic flowchart of an information processing method according to an illustrative embodiment.
FIG. 4c is a schematic flowchart of an information processing method according to an illustrative embodiment.
FIG. 4d is a schematic flowchart of an information processing method according to an illustrative embodiment.
FIG. 5a is a schematic flowchart of an information processing method according to an illustrative embodiment.
FIG. 5b is a schematic flowchart of an information processing method according to an illustrative embodiment.
FIG. 5c is a schematic flowchart of an information processing method according to an illustrative embodiment.
FIG. 5d is a schematic flowchart of an information processing method according to an illustrative embodiment.
FIG. 6 is a schematic flowchart of an information processing method according to an illustrative embodiment.
FIG. 7a is a schematic flowchart of an information processing method according to an illustrative embodiment.
FIG. 7b is a schematic flowchart of an information processing method according to an illustrative embodiment.
FIG. 7c is a schematic flowchart of an information processing method according to an illustrative embodiment.
FIG. 8a is a block diagram of a first network element according to an illustrative embodiment.
FIG. 8b is a block diagram of a second network element according to an illustrative embodiment.
FIG. 8c is a block diagram of a third network element according to an illustrative embodiment.
FIG. 8d is a block diagram of a fourth network element according to an illustrative embodiment.
FIG. 9a is a block diagram of a UE according to an illustrative embodiment.
FIG. 9b is a block diagram of a communication device according to an illustrative embodiment.

### DETAILED DESCRIPTION

Embodiments of the present disclosure provide an information processing method, a network element, a communication device, a communication system and a storage medium.

In a first aspect, embodiments of the present disclosure provide an information processing method. The method is performed by a first network element, and includes:
sending first information to a second network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

In the above embodiments, since the first information includes the group identifier associated with the terminal or PDU session, the second network element can at least consider the group identifier associated with the terminal or PDU session when performing network slice admission control on the terminal requesting registration or the PDU session requesting activation using the first information. This ensures consistency in the admission control strategies for relevant terminals or PDU sessions in the network slice, thereby improving user experience.

In combination with some embodiments of the first aspect, in some embodiments, sending the first information to the second network element includes:
receiving a first request sent by a third network element, wherein the first request is configured to update a number of registered terminals, and the first request includes the first information; and
sending a second request to the second network element, wherein the second request includes the first information.

In the above embodiments, the first network element sends the second request including the first information to the second network element, so that the second network element can perform network slice admission control on the terminal requesting registration. This can achieve consistency in admission control strategies for relevant terminals in the network slice through hierarchical admission control, and improve user experience.

In combination with some embodiments of the first aspect, in some embodiments, sending the first information to the second network element includes:
receiving a third request sent by a fourth network element, wherein the third request is configured to update a number of activated PDU sessions, and the third request includes the first information; and
sending a fourth request to the second network element, wherein the fourth request includes the first information.

In the above embodiments, the first network element sends the fourth request including the first information to the second network element, so that the second network element can perform network slice admission control on the PDU session requesting activation. This can achieve consistency in admission control strategies for relevant PDU sessions in the network slice through hierarchical admission control, and improve user experience.

In combination with some embodiments of the first aspect, in some embodiments, sending the first information to the second network element includes:
sending the first information to the second network element in a case where a number of terminals registered with a network slice of the first network element reaches or does not reach a maximum number of terminals registered with the network slice.

In the above embodiments, regardless of whether the number of terminals registered with the network slice of the first network element reaches the maximum number of terminals registered with the network slice, the first network element will send a request message including the first information to the second network element. Through hierarchical admission control, the second network element uniformly executes network slice admission control, achieving consistency in admission control strategies for relevant terminals in the network slice and improving user experience.

In combination with some embodiments of the first aspect, in some embodiments, sending the first information to the second network element includes:
sending the first information to the second network element in a case where a group number of terminals registered with a network slice of the first network element reaches a maximum group number of terminals registered with the network slice; and/or
sending the first information to the second network element in a case where a group number of PDU sessions in a network slice of the first network element reaches a maximum group number of PDU sessions in the network slice.

In the above embodiments, network slice admission control is based on the group number of terminals registered with the network slice, and in the case of exceeding the capacity of the local first network element, admission control is requested from the second network element with higher capacity. Through hierarchical admission control, consistency of admission control strategies for relevant terminals in the network slice is achieved, improving user experience.

In the above embodiments, network slice admission control is based on the group number of PDU sessions the network slice, and in the case of exceeding the capacity of the local first network element, admission control is requested from the second network element with higher capacity. Through hierarchical admission control, consistency of admission control strategies for relevant PDU sessions in the network slice is achieved, improving user experience.

In combination with some embodiments of the first aspect, in some embodiments, sending the second request to the second network element includes:
sending the second request to the second network element in a case where a group number of terminals registered with a network slice of the first network element reaches a maximum group number of terminals registered with the network slice.

In the above embodiments, network slice admission control is based on the group number of terminals registered with the network slice, and in the case of exceeding the capacity of the local first network element, admission control is requested from the second network element with higher capacity. Through hierarchical admission control, consistency of admission control strategies for relevant terminals in the network slice is achieved, improving user experience.

In combination with some embodiments of the first aspect, in some embodiments, sending the first information to the second network element includes:
sending the first information to the second network element in a case where a number of PDU sessions in a network slice of the first network element reaches or does not reach a maximum number of PDU sessions in the network slice.

In combination with some embodiments of the first aspect, in some embodiments, sending the fourth request to the second network element includes:
sending the fourth request to the second network element in a case where a number of PDU sessions in a network slice of the first network element reaches or does not reach a maximum number of PDU sessions in the network slice.

In the above embodiments, regardless of whether the number of PDU sessions in the network slice of the first network element reaches the maximum number of PDU sessions in the network slice, the first network element will send a request message including the first information to the second network element. Through hierarchical admission control, the second network element uniformly executes network slice admission control, achieving consistency in the admission control strategies for relevant PDU sessions in the network slice and improving user experience.

In combination with some embodiments of the first aspect, in some embodiments, the method further includes:
receiving a first response corresponding to the second request and sent by the second network element, wherein the first response includes second information, and the second information is configured to update a maximum number of terminals registered with a network slice of the first network element.

In the above embodiments, updating the maximum number of terminals registered with the network slice of the first network element is indicated by the second network element, thus achieving flexible adjustment of the capacity of the first network element by the second network element. While achieving consistency in admission control strategies for relevant terminals in the network slice, the flexibility of admission control is improved.

In combination with some embodiments of the first aspect, in some embodiments, the method further includes:
receiving a second response corresponding to the fourth request and sent by the second network element, wherein the second response includes third information, and the third information is configured to update a maximum number of PDU sessions in a network slice of the first network element.

In the above embodiments, updating the maximum number of PDU sessions in the network slice of the first network element is indicated by the second network element, thus achieving flexible adjustment of the capacity of the first network element by the second network element. While achieving consistency in admission control strategies for relevant PDU sessions in the network slice, the flexibility of admission control is improved.

In combination with some embodiments of the first aspect, in some embodiments, the method further includes:
sending fourth information to the second network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

In the above embodiments, the remaining quota or used quota in the NSAC quota is sent from the first network element to the second network element, which facilitates the second network element to flexibly adjust the NSAC quota allocated to the first network element and improves the flexibility of admission control.

In combination with some embodiments of the first aspect, in some embodiments, sending the fourth information to the second network element includes:
sending the fourth information to the second network element according to a subscription request from the second network element, wherein the subscription request is configured to subscribe the remaining quota or the used quota in the NSAC quota from the first network element.

In the above embodiments, the first network element sends the remaining quota or used quota in the NSAC quota to the second network element based on the subscription request from the second network element, which can reduce the network load caused by the first network element actively sending real-time remaining quota or used quota.

In combination with some embodiments of the first aspect, in some embodiments, the first network element is a local network slice admission control function (NSACF) network element, and the second network element is a primary NSACF network element;
the third network element is an access and mobility management function (AMF) network element, and the fourth network element is a session management function (SMF) network element.

In the above embodiments, consistency in admission control strategies for relevant terminals in network slice is achieved through a hierarchical architecture of local NSACF network element and primary NSACF network element, improving user experience.

In combination with some embodiments of the first aspect, in some embodiments, the method further includes one of:
determining the group identifier based on local configuration information and/or operations, administration and maintenance (OAM) configuration information of the first network element;
receiving the group identifier sent by a fifth network element.

In the above embodiments, the first network element may determine the group identifier based on local configuration information and/or OAM configuration information, or may also receive the group identifier from the fifth network element. In this way, when the terminal requests registration to the network slice or the PDU session requests activation to the network slice, the first network element can send the group identifier associated with the terminal or PDU session, so that the second network element can at least consider the group identifier associated with the terminal or PDU session when performing network slice admission control on the terminal requesting registration or PDU session requesting activation. This can achieve consistency in admission control strategies for relevant terminals or PDU sessions in the network slice and improve user experience.

In combination with some embodiments of the first aspect, in some embodiments, the group identifier is configured to identify at least one of:
a service group associated with the terminal requesting registration;
an application group associated with the terminal requesting registration;
a service group associated with the PDU session requesting activation; or
an application group associated with the PDU session requesting activation.

In the above embodiments, the first information is sent from the first network element to the second network element, so that the second network element, when using the first information to perform network slice admission control on the terminal requesting registration or the PDU session requesting activation, at least considers the service group or application group associated with the terminal or the service group or application group associated with the PDU session. This can achieve consistency in the admission control strategies for the terminals associated with the service group or application group in the network slice, as well as consistency in the admission control strategies for the PDU sessions associated with the service group or application group in the network slice, ensuring normal service provision in specific scenarios and improving user experience.

In a second aspect, an information processing method is provided. The method is performed by a second network element, and includes:
receiving first information sent by a first network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

In the above embodiments, since the first information includes the group identifier associated with the terminal or PDU session, the second network element can at least consider the group identifier associated with the terminal or PDU session when performing network slice admission control on the terminal requesting registration or the PDU session requesting activation using the first information. This ensures consistency in the admission control strategies for relevant terminals or PDU sessions in the network slice, thereby improving user experience.

In combination with some embodiments of the second aspect, in some embodiments, receiving the first information sent by the first network element includes at least one of:
receiving a second request including the first information sent by the first network element, wherein the second request is sent based on a first request comprising the first information from a third network element, and the first request is configured to update a number of registered terminals; or
receiving a fourth request including the first information sent by the first network element, wherein the fourth request is sent based on a third request comprising the first information from a fourth network element, and the third request is configured to update a number of activated PDU sessions.

In combination with some embodiments of the second aspect, in some embodiments, the method further includes at least one of:
sending a first response corresponding to the second request to the first network element according to a global maximum number of registered terminals and the first information; or
sending a second response corresponding to the fourth request to the first network element according to a global maximum number of PDU sessions and the first information.

In the above embodiments, the second network element can perform admission control on the terminal requesting registration in the network slice based on the global maximum number of registered terminals and taking into account the group identifier in the first information, which can achieve consistency in the admission control strategies for the relevant terminals in the network slice. The second network element can also perform admission control on PDU sessions requesting activation in the network slice based on the global maximum number of PDU sessions and taking into account the group identifier in the first information, which can achieve consistency in the admission control strategies for relevant PDU sessions in the network slice.

In combination with some embodiments of the second aspect, in some embodiments, the first response includes second information, and the second information is configured to update a maximum number of terminals registered with a network slice of the first network element; and/or the second response includes third information, and the third information is configured to update a maximum number of PDU sessions in a network slice of the first network element.

In combination with some embodiments of the second aspect, in some embodiments, the method further includes:
determining a reserved quantity in the global maximum number of registered terminals or the global maximum number of PDU sessions, wherein the reserved quantity is one of:
a terminal quota of a reserved NSAC associated with the group identifier;
a PDU session quota of a reserved NSAC associated with the group identifier; or
a group quota of a reserved NSAC, wherein the group quota is associated with a terminal group or a PDU session identified by the group identifier.

In the above embodiments, the reserved quantity in the global maximum number of registered terminals or the global maximum number of PDU sessions is determined by the second network element, which can reduce the occurrence of failed access by the terminal requesting registration or PDU session requesting activation in the network slice, thereby better meeting the service needs of the terminal and improving user experience.

In combination with some embodiments of the second aspect, in some embodiments, the method further includes:
receiving fourth information sent by the first network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

In combination with some embodiments of the second aspect, in some embodiments, the method further includes:
sending a subscription request to the first network element, wherein the subscription request is configured to subscribe the remaining quota or the used quota in the NSAC quota from the first network element.

In combination with some embodiments of the second aspect, in some embodiments, the method further includes:
updating the NSAC quota according to the remaining quota or the used quota in the NSAC quota.

In combination with some embodiments of the second aspect, in some embodiments, the group identifier is determined by the first network element based on local configuration information and/or operations, administration and maintenance (OAM) configuration information of the first network element; or the group identifier is received by the first network element from a fifth network element.

In combination with some embodiments of the second aspect, in some embodiments, the group identifier is configured to identify at least one of:
a service group associated with the terminal requesting registration;
an application group associated with the terminal requesting registration;
a service group associated with the PDU session requesting activation; or
an application group associated with the PDU session requesting activation.

In a third aspect, an information processing method is provided. The method is performed by a third network element, and includes:
sending first information to a first network element, wherein the first information is configured to indicate a second network element to perform network slice admission control (NSAC) on a terminal requesting registration, and wherein the first information includes a group identifier associated with the terminal.

In the above embodiments, since the first information includes the group identifier associated with the terminal, the second network element can consider at least the group identifier associated with the terminal when performing network slice admission control on the terminal requesting registration using the first information, thereby achieving consistency in admission control strategies for relevant terminals in the network slice and improving user experience.

In combination with some embodiments of the third aspect, in some embodiments, sending the first information to the first network element includes:
sending a first request comprising the first information to the first network element, wherein the first request is configured to update a number of registered terminals.

In combination with some embodiments of the third aspect, in some embodiments, the group identifier is determined by the third network element based on at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
group information in a context of the terminal.

In the above embodiments, the group identifier associated with the terminal is determined by the third network element, so that the second network element can consider the group identifier associated with the terminal when performing network slice admission control on the terminal requesting registration. This can achieve consistency in admission control strategies for related terminals and improve user experience.

In combination with some embodiments of the third aspect, in some embodiments, the group identifier is configured to identify at least one of:
a service group associated with the terminal requesting registration; or
an application group associated with the terminal requesting registration.

In a fourth aspect, an information processing method is provided. The method is performed by a fourth network element, and includes:
sending first information to a first network element, wherein the first information is configured to indicate a second network element to perform network slice admission control (NSAC) on a packet data unit (PDU) session requesting activation, and wherein the first information comprises a group identifier associated with the PDU session.

In the above embodiments, since the first information includes the group identifier associated with the PDU session, the second network element can at least consider the group identifier associated with the PDU session when performing network slice admission control on the PDU session requesting activation using the first information, thereby achieving consistency in admission control strategies for relevant PDU sessions in the network slice and improving user experience.

In combination with some embodiments of the fourth aspect, in some embodiments, sending the first information to the first network element includes:
sending a third request including the first information to the first network element, wherein the third request is configured to update a number of activated PDU sessions.

In combination with some embodiments of the fourth aspect, in some embodiments, the group identifier is determined by the fourth network element based on at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
group information in a context of the terminal.

In the above embodiments, the group identifier of the PDU session is determined by the fourth network element, so that the second network element can consider the group identifier associated with the PDU session when performing network slice admission control on the PDU session requesting activation. This can achieve consistency in the admission control strategies for related PDU sessions and improve user experience.

In combination with some embodiments of the fourth aspect, in some embodiments, the group identifier is configured to identify at least one of:
a service group associated with the terminal requesting registration; or
an application group associated with the terminal requesting registration.

In a fifth aspect, an information processing method is provided. The method is performed by a communication system, and includes:
sending first information, by a first network element, to a second network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

In the above embodiments, since the first information includes the group identifier associated with the terminal, the second network element can at least consider the group identifier associated with the terminal when performing network slice admission control on the terminal requesting registration using the first information. This ensures consistency in the admission control strategies for relevant terminals in the network slice, thereby improving user experience.

In combination with some embodiments of the fifth aspect, in some embodiments, sending the first information, by the first network element, to the second network element includes:
receiving, by the first network element, a first request including the first information and sent by a third network element; and
sending, by the first network element, a second request including the first information to the second network element, wherein the first request is configured to update a number of registered terminals.

In combination with some embodiments of the fifth aspect, in some embodiments, sending the first information, by the first network element, to the second network element includes:
receiving, by the first network element, a third request including the first information and sent by a fourth network element; and
sending, by the first network element, a fourth request including the first information to the second network element, wherein the third request is configured to update a number of activated PDU sessions.

In combination with some embodiments of the fifth aspect, in some embodiments, sending, by the first network element, the second request including the first information to the second network element includes:
sending, by the first network element, the second request including the first information to the second network element, in a case where a group number of terminals registered with a network slice of the first network element reaches a maximum group number of terminals registered with the network slice.

In combination with some embodiments of the fifth aspect, in some embodiments, sending, by the first network element, the fourth request including the first information to the second network element includes:
sending, by the first network element, the fourth request including the first information to the second network element, in a case where a group number of PDU sessions in a network slice of the first network element reaches a maximum group number of PDU sessions in the network slice.

In combination with some embodiments of the fifth aspect, in some embodiments, sending the first information, by the first network element, to the second network element includes:
sending, by the first network element, the first information to the second network element, in a case where a group number of terminals registered with a network slice of the first network element reaches a maximum group number of terminals registered with the terminal; and/or
sending, by the first network element, the first information to the second network element, in a case where a group number of PDU sessions in a network slice of the first network element reaches a maximum group number of PDU sessions in the network slice.

In combination with some embodiments of the fifth aspect, in some embodiments, the method further includes at least one of:
receiving, by the first network element, a first response corresponding to the second request and sent by the second network element, wherein the first response includes second information, and the second information is configured to update a maximum number of terminals registered with a network slice of the first network element; or
receiving, by the first network element, a second response corresponding to the fourth request and sent by the second network element, wherein the second response includes third information, and the third information is configured to update a maximum number of PDU sessions in a network slice of the first network element.

In combination with some embodiments of the fifth aspect, in some embodiments, the method further includes:
sending, by the first network element, fourth information to the second network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

In combination with some embodiments of the fifth aspect, in some embodiments, sending, by the first network element, the fourth information to the second network element includes:
sending the fourth information to the second network element according to a subscription request from the second network element, wherein the subscription request is configured to subscribe the remaining quota or the used quota in the NSAC quota from the first network element.

In combination with some embodiments of the fifth aspect, in some embodiments, the first network element is a local NSACF network element, and the second network element is a primary NSACF network element;
the third network element is an AMF network element, and the fourth network element is an SMF network element.

In combination with some embodiments of the fifth aspect, in some embodiments, the method further incudes one of:
determining the group identifier based on local configuration information and/or operations, administration and maintenance (OAM) configuration information of the first network element;
receiving the group identifier sent by a fifth network element.

In combination with some embodiments of the fifth aspect, in some embodiments, the group identifier is configured to identify at least one of:
a service group associated with the terminal requesting registration;
an application group associated with the terminal requesting registration;
a service group associated with the PDU session requesting activation; or
an application group associated with the PDU session requesting activation.

In a sixth aspect, a first network element is provided. The first network element includes:
a sending module, configured to send first information to a second network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

In combination with some embodiments of the sixth aspect, in some embodiments, the first network element further includes a first receiving module;
the first receiving module is configured to receive a first request sent by a third network element, wherein the first request is configured to update a number of registered terminals, and the first request includes the first information; and
the sending module is configured to send a second request to the second network element, wherein the second request includes the first information.

In combination with some embodiments of the sixth aspect, in some embodiments, the first network element further includes a second receiving module;
the second receiving module is configured to receive a third request sent by a fourth network element, wherein the third request is configured to update a number of activated PDU sessions, and the third request includes the first information; and
the sending module is configured to send a fourth request to the second network element, wherein the fourth request includes the first information.

In combination with some embodiments of the sixth aspect, in some embodiments, the sending module is configured to:
send the first information to the second network element in a case where a number of terminals registered with a network slice of the first network element reaches or does not reach a maximum number of terminals registered with the network slice.

In combination with some embodiments of the sixth aspect, in some embodiments, the sending module is configured to:
send the first information to the second network element in a case where a number of PDU sessions in a network slice of the first network element reaches or does not reach a maximum number of PDU sessions in the network slice.

In combination with some embodiments of the sixth aspect, in some embodiments, the apparatus further includes a third receiving module, and the third receiving module is further configured to perform at least one of:
receiving a first response corresponding to the second request and sent by the second network element, wherein the first response includes second information, and the second information is configured to update a maximum number of terminals registered with a network slice of the first network element; or
receiving a second response corresponding to the fourth request and sent by the second network element, wherein the second response includes third information, and the third information is configured to update a maximum number of PDU sessions in a network slice of the first network element.

In combination with some embodiments of the sixth aspect, in some embodiments, the sending module is further configured to:
send fourth information to the second network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

In combination with some embodiments of the sixth aspect, in some embodiments, the sending module is further configured to:
send the fourth information to the second network element according to a subscription request from the second network element, wherein the subscription request is configured to subscribe the remaining quota or the used quota in the NSAC quota from the first network element.

In combination with some embodiments of the sixth aspect, in some embodiments, the first network element is a local NSACF network element, the second network element is a primary NSACF network element, the third network element is an AMF network element, and the fourth network element is an SMF network element.

In combination with some embodiments of the sixth aspect, in some embodiments, the apparatus further includes a receiving module, the apparatus further includes an obtaining module, and the obtaining module is configured to perform one of:
determining the group identifier based on local configuration information and/or operations, administration and maintenance (OAM) configuration information of the first network element;
receiving the group identifier sent by a fifth network element.

In combination with some embodiments of the sixth aspect, in some embodiments, the group identifier is configured to identify at least one of:
a service group associated with the terminal requesting registration;
an application group associated with the terminal requesting registration;
a service group associated with the PDU session requesting activation; or
an application group associated with the PDU session requesting activation.

In a seventh aspect, a second network element is provided. The second network element includes:
a receiving module, configured to receive first information sent by a first network element, wherein the first information is configured to indicate the second network element to perform network slice admission control (NSAC) on a terminal requesting registration or a packet data unit (PDU) session requesting activation, and wherein the first information includes a group identifier associated with the terminal or the PDU session.

In combination with some embodiments of the seventh aspect, in some embodiments, the receiving module is configured to perform at least one of:
receiving a second request including the first information sent by the first network element, wherein the second request is sent based on a first request comprising the first information from a third network element, and the first request is configured to update a number of registered terminals; or
receiving a fourth request including the first information sent by the first network element, wherein the fourth request is sent based on a third request comprising the first information from a fourth network element, and the third request is configured to update a number of activated PDU sessions.

In combination with some embodiments of the seventh aspect, in some embodiments, the apparatus further includes a first sending module, and the first sending module is configured to perform:
sending a first response corresponding to the second request to the first network element according to a global maximum number of registered terminals and the first information, wherein the first response includes second information, and the second information is configured to update a maximum number of terminal registered with a network slice of the first network element.

In combination with some embodiments of the seventh aspect, in some embodiments, the apparatus further includes a second sending module, and the second sending module is configured to perform:
sending a second response corresponding to the fourth request to the first network element according to a global maximum number of PDU sessions and the first information, wherein the second response includes third information, and the third information is configured to update a maximum number of PDU sessions in a network slice of the first network element.

In combination with some embodiments of the seventh aspect, in some embodiments, the apparatus further includes:
a determining module, configured to determine a reserved quantity in the global maximum number of registered terminals or the global maximum number of PDU sessions, wherein the reserved quantity is one of:
a terminal quota of a reserved NSAC associated with the group identifier;
a PDU session quota of a reserved NSAC associated with the group identifier; or
a group quota of a reserved NSAC, wherein the group quota is associated with a terminal group or a PDU session identified by the group identifier.

In combination with some embodiments of the seventh aspect, in some embodiments, the receiving module is further configured to:
receive fourth information sent by the first network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

In combination with some embodiments of the seventh aspect, in some embodiments, the apparatus further includes:
a third sending module, configured to send a subscription request to the first network element, wherein the subscription request is configured to subscribe the remaining quota or the used quota in the NSAC quota from the first network element.

In combination with some embodiments of the seventh aspect, in some embodiments, the apparatus further includes:
an updating module, configured to update the NSAC quota according to the remaining quota or the used quota in the NSAC quota.

In combination with some embodiments of the seventh aspect, in some embodiments, the group identifier is determined by the first network element based on local configuration information and/or operations, administration and maintenance (OAM) configuration information of the first network element; or the group identifier is received by the first network element from a fifth network element.

In combination with some embodiments of the seventh aspect, in some embodiments, the group identifier is configured to identify at least one of:
a service group associated with the terminal requesting registration;
an application group associated with the terminal requesting registration;
a service group associated with the PDU session requesting activation; or
an application group associated with the PDU session requesting activation.

In an eighth aspect, a third network element is provided. The third network element includes:
a sending module, configured to send first information to a first network element, wherein the first information is configured to indicate a second network element to perform network slice admission control (NSAC) on a terminal requesting registration, and wherein the first information includes a group identifier associated with the terminal.

In combination with some embodiments of the eighth aspect, in some embodiments, the sending module is configured to:
send a first request comprising the first information to the first network element, wherein the first request is configured to update a number of registered terminals.

In combination with some embodiments of the eighth aspect, in some embodiments, the group identifier is determined by the third network element based on at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
group information in a context of the terminal.

In combination with some embodiments of the eighth aspect, in some embodiments, the group identifier is configured to identify at least one of:
a service group associated with the terminal requesting registration; or
an application group associated with the terminal requesting registration.

In a ninth aspect, a fourth network element is provided. The fourth network element includes:
a sending module, configured to send first information to a first network element, wherein the first information is configured to indicate a second network element to perform network slice admission control (NSAC) on a packet data unit (PDU) session requesting activation, and wherein the first information comprises a group identifier associated with the PDU session.

In combination with some embodiments of the ninth aspect, in some embodiments, the sending module is configured to:
send a third request including the first information to the first network element, wherein the third request is configured to update a number of activated PDU sessions.

In combination with some embodiments of the ninth aspect, in some embodiments, the group identifier is determined by the fourth network element based on at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
group information in a context of the terminal.

In combination with some embodiments of the ninth aspect, in some embodiments, the group identifier is configured to identify at least one of:
a service group associated with the terminal requesting registration; or
an application group associated with the terminal requesting registration.

In a tenth aspect, a communication system is provided. The communication system includes a first network element, a second network element, a third network element and a fourth network element. The first network element is configured to implement the information processing method described in optional implementations of the first aspect, the second network element is configured to implement the information processing method described in optional implementations of the second aspect, the third network element is configured to implement the information processing method described in optional implementations of the third aspect, and the fourth network element is configured to implement the information processing method described in optional implementations of the fourth aspect.

In an eleventh aspect, a communication device is provided. The communication device includes:
one or more processors;
wherein the processor is configured to call instructions to cause the communication device to implement the information processing method described in optional implementations of the first aspect, the second aspect, the third aspect or the fourth aspect.

In a twelfth aspect, a storage medium is provided. The storage medium stores instructions that, when run on a communication device, cause the communication device to implement the information processing method described in optional implementations of the first aspect, the second aspect, the third aspect or the fourth aspect.

In a thirteenth aspect, embodiments of the present disclosure provide a program product that, when executed by a communication device, causes the communication device to implement the information processing method described in optional implementations of the first aspect, the second aspect, the third aspect or the fourth aspect.

In a fourteenth aspect, embodiments of the present disclosure provide a computer program that, when run on a computer, causes the computer to implement the information processing method described in optional implementations of the first aspect, the second aspect, the third aspect or the fourth aspect.

It can be understood that the first to fourth network elements, communication device, communication system, storage medium, program product, and computer program mentioned above are all configured to execute the methods provided in embodiments of the present disclosure. Therefore, for the beneficial effects they can achieve, reference can be made to the beneficial effects in the corresponding methods, which will not be repeated here.

In some embodiments, the terms "information processing method" can be interchanged with "communication method" and "information transmission method," while terms such as "communication system", "information processing system", and "information transmission system" can also be interchanged.

The embodiments of the present disclosure are not exhaustive and only serve as illustrations of some embodiments, but not as specific limitations to the protection scope of the present disclosure. In the absence of contradiction, each step in a certain embodiment may be implemented as an independent embodiment, and respective steps may be arbitrarily combined. For example, a solution after removing some steps in a certain embodiment may also be implemented as an independent embodiment, and the order of the steps in a certain embodiment may be arbitrarily exchanged. In addition, optional implementations in a certain embodiment may be arbitrarily combined; in addition, respective embodiments may be arbitrarily combined, for example, some or all steps of different embodiments may be arbitrarily combined, and a certain embodiment may be arbitrarily combined with optional implementations of other embodiments.

In various embodiments of the present disclosure, unless otherwise specified and in case of logical inconsistency, terms and/or descriptions are consistent in all embodiments and reference may be made to each other. Technical features from different embodiments may be combined to form a new embodiment based on their inherent logical relationships.

The terms used in the embodiments of the present disclosure are for a purpose of describing specific embodiments only and are not intended to limit the present disclosure.

In embodiments of the present disclosure, unless otherwise specified, elements expressed in a singular form, such as "a", "an", "the", "said", "above", "aforementioned", "this" etc. may mean "one and only one" or may mean "one or more", "at least one", etc. For example, when articles such as "a", "an", or "the" are used in translation, the noun following the article may be understood in the singular form or in the plural form.

In the embodiments of the present disclosure, "a plurality of" means two or more.

In some embodiments, terms such as "at least one of", "one or more", "a plurality of", "multiple", etc. may be used interchangeably.

In some embodiments, expressions such as "at least one of A or B", "A and/or B", "in a case, A, in another case, B", and "in response to a case, A, in response to another case, B" in the present disclosure, depending on situations, may include at least one of the following solutions: performing A in some embodiments (performing A independently of B); performing B in some embodiments (performing B independently of A); selecting one of A or B for execution in some embodiments (selectively performing A or B); and performing A and B in some embodiments (performing both A and B). The similar principle applies when there are more branches such as A, B, C, etc.

In some embodiments, expressions such as "A or B", depending on situations, may include the following technical solutions: performing A in some embodiments (performing A independently of B); performing B in some embodiments (performing B independently of A); and selecting one of A or B for execution in some embodiments (selectively performing A or B). The similar principle applies when there are more branches such as A, B, C, etc.

The terms such as "first" and "second" added in front of other words in embodiments of the present disclosure are used solely to distinguish different described objects and do not limit a position, a sequence, a priority, a quantity, or content of the described objects. For a statement regarding the described object, reference may be made to claims or descriptions in the context of embodiments and should not constitute other restrictions due to the use of the above terms in front of other words. For example, if the described object is "element", ordinal numbers before the "element" in "first element" and "second element" do not limit a position or a sequence between elements. "First" and "second" do not limit whether modified "elements" are in the same message, nor do an order of the "first element" and the "second element." For another example, if the described object is "level", ordinal numbers before the "level" in "first level" and "second level" do not limit a priority between levels. Furthermore, a quantity of described objects is not limited by the ordinal numbers, which may be one or more. Taking "first apparatus" as an example, there may be one or more "apparatus". In addition, objects described by different words may be the same or different. For example, if the described object is an "apparatus", "first apparatus" and "second apparatus" may be the same apparatus or different apparatuses, and their types may be the same or different. Similarly, if the described object is "information", "first information" and "second information" may be same information or different information, and their content may be the same or different.

In some embodiments, "including A", "containing A", "configured to indicate A", or "carrying A" may be interpreted as directly carrying A or indirectly indicating A.

In some embodiments, terms such as "in response to...", "in response to determining...", "in a case that...", "when...", "if..." etc. may be used interchangeably.

In some embodiments, the terms such as "greater than", "greater than or equal to", "not less than", "more than", "more than or equal to", "not smaller than", "higher than", "higher than or equal to", "not lower than", "above", etc. may be used interchangeably. The terms such as "less than", "less than or equal to", "not greater than", "fewer than", "fewer than or equal to", "no more than", "lower than", "lower than or equal to", "not higher than", "below" etc. may also be used interchangeably.

In some embodiments, "apparatus" and "device" may be interpreted as either a physical apparatus or a virtual apparatus. Names are not limited to those recorded in embodiments. In some cases, "apparatus" and "device" may be understood as "equipment", "device", "circuit", "network element", "node", "function", "unit", "section", "system", "network", "chip", "chip system", "entity", "subject", etc.

In some embodiments, "network" may be interpreted as a device included in a network, for example, an access network device, a core network device, and the like.

In some embodiments, "access network device (AN device)" may also be called "radio access network device (RAN device)", "base station (BS)", "radio base station", "fixed station", and in some embodiments may also be understood as "node", "access point", "transmission point (TP)", "reception point (RP)", "transmission/reception point (TRP)", "panel", "antenna panel", "antenna array", "cell", "macro cell", "small cell", "femto cell", "pico cell", "sector", "cell group", "serving cell", "carrier", "component carrier", "bandwidth part (BWP)", etc.

In some embodiments, "terminal" or "terminal device" may be called "user equipment (UE)", "user terminal", "mobile station (MS)", "mobile terminal (MT)", "subscriber station", "mobile unit", "subscriber unit", "wireless unit", "remote unit", "mobile device", "wireless device", "wireless communication device", "remote device", "mobile subscriber station", "access terminal", "mobile terminal", "wireless terminal", "remote terminal", "handset", "user agent", "mobile client", "client", etc.

In some embodiments, access network devices, core network devices, or network devices may be replaced with terminals. For example, the various embodiments disclosed herein can also be applied to the structure of replacing communication between access network devices, core network devices, or network devices and terminals with communication between multiple terminals (such as device to device (D2D), vehicle to everything (V2X), etc.). In this case, it can also be assumed that the terminal has all or part of the functions of the access network device. In addition, terms such as "uplink" and "downlink" can also be replaced with terms corresponding to communication between terminals (such as "side"). For example, the uplink and downlink channels can be replaced with sidelink channels, and the uplink and downlink can be replaced with sidelink.

In some embodiments, the terminal may be replaced with an access network device, a core network device, or a network device. In this case, it can also be configured as an access network device, core network device, or network device with all or part of the functions possessed by the terminal.

In some embodiments, obtaining data, information, etc. shall comply with laws and regulations of a country where it is located.

In some embodiments, data, information, etc. may be obtained after agreed by a user.

In addition, each element, each row, or each column in tables of the embodiments of the present disclosure may be implemented as an independent embodiment. Any combination of elements, rows, or columns may also be implemented as an independent embodiment.

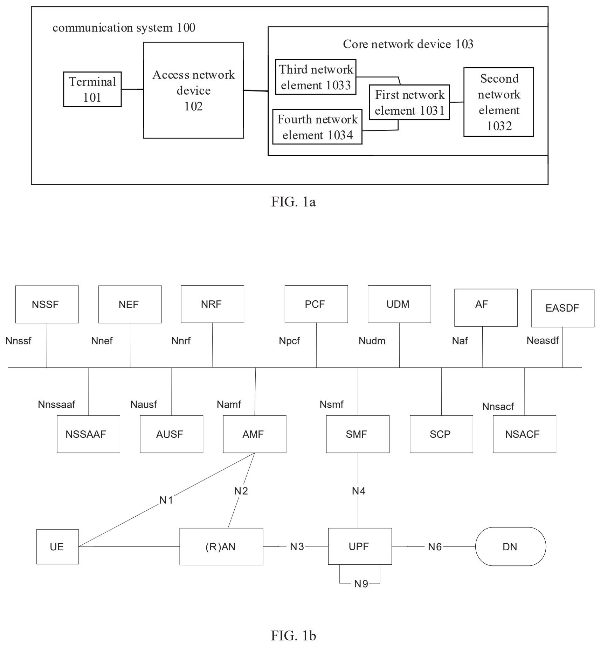

FIG. 1a is a schematic diagram of an architecture of a communication system according to the embodiments of the present disclosure.

As shown in FIG. 1a, the communication system 100 includes a terminal 101, an access network device 102 and a core network device 103.

In some embodiments, the terminal 101 includes, for example, at least one of a mobile phone, a wearable device, an Internet of Things device, or a car, a smart car, and a Pad, with a communication function, a computer with a wireless transceiving function, a virtual reality (VR) terminal, an augmented reality (AR) terminal, a wireless terminal in industrial control, a wireless terminal in self-driving, a wireless terminal in a remote medical surgery, a wireless terminal in a smart grid, a wireless terminal in a transportation safety, a wireless terminal in a smart city, or a wireless terminal in a smart home, etc., which is not limited thereto.

In some embodiments, the access network device 102 may be, for example, a node or device that connects the terminal to a wireless network. The access network device may include at least one of an evolved NodeB (eNB) in a 5G communication system, a next generation eNB (ng-eNB), a next generation NodeB (gNB), a node B (NB), a home node B (HNB), a home evolved nodeB (HeNB), a wireless backhaul device, a radio network controller (RNC), a base station controller (BSC), a base transceiver station (BTS), a baseband unit (BBU), a mobile switching center, a base station in a 6G communication system, an Open RAN, a Cloud RAN, a base station in another communication system, an access node in a wireless fidelity (Wi-Fi) system, which is not limited thereto.

In some embodiments, the technical solution of the present disclosure may be applied to an architecture of the Open RAN. In this case, an interface between access network devices or within the access network device in the embodiments of the present disclosure may become an internal interface of the Open RAN. Processes and information interaction among internal interfaces may be implemented via software or programs.

In some embodiments, the access network device may be composed of a central unit (CU) and distributed units (DUs). The CU may also be referred to as a control unit. The use of CU-DU structure allows to divide a protocol layer of the access network device, such that some of the protocol layer functions are placed in the CU for centralized control, and some or all of the remaining protocol layer functions are distributed in the DUs, and the DUs are centrally controlled by the CU, which is not limited thereto.

In some embodiments, the core network device 103 may include multiple network elements, such as a first network element 1031, a second network element 1032, a third network element 1033 and a fourth network element 1034 (network elements may also be referred to as "network functions"), or multiple devices or device groups, including the first network element 1031, the second network element 1032, the third network element 1033, and the fourth network element 1034, respectively. The network elements may be virtual or physical. The core network includes, for example, at least one of an evolved packet core (EPC), a 5G core network (5GCN), or a next generation core (NGC).

In some embodiments, the second network element is at least configured for global management of one or more first network elements.

In some embodiments, the serving area of the second network element includes the serving area of the first network element. For example, the serving area of the second network element is the global serving area, and the serving area of the first network element include one or more serving areas within the global serving area.

In some embodiments, both the first network element and the second network element can be used for admission control of network slice.

In some embodiments, the first network element may be a local NSACF network element.

In some embodiments, the second network element may be a primary NSACF network element.

In some embodiments, the first network element 1031 and the second network element 1032 are hierarchically arranged, with the second network element 1032 having a higher level than the first network element 1031.

In some embodiments, the third network element 1033 may be used for access and mobility management, such as registration management, connection management, and mobility management, and the name is not limited to this. For example, the third network element 1033 may be an AMF network element.

In some embodiments, the fourth network element 1034 may be used for session management, such as PDU session management, etc., and the name is not limited to this. For example, the fourth network element 1034 may be an SMF network element.

Taking the 5G communication system as an example, FIG. 1b is a schematic diagram of an architecture of a non-roaming 5G communication system. As shown in FIG. 1b, the core network in the 5G communication system may include multiple network elements. Multiple network elements may include but are not limited to: (1) AMF (Access and Mobility Management Function): responsible for user access and mobility management; (2) SMF (Session Management Function): responsible for managing user sessions; (3) NSACF (Network Slice Admission Control Function): responsible for admission control of network slices; (4) UPF (User Plane Function): responsible for user plane processing; (5) NEF (Network Exposure Function): responsible for collecting, analyzing, and reassembling network capabilities, and opening up network capabilities; (6) PCF (Policy Control Function): responsible for controlling user policies, including session policies and mobility policies; (7) UDM (Unified Data Management): responsible for managing user subscription data; (8) NSSF (Network Slice Selection Function) : responsible for selecting the network slice adopted by the user's business, etc. among which, Nnsacf, Nnssf, Nnssaaf, Nausf, Nnef, Namf, Npcf, Nnrf, Nsmf, Nudm, Naf, N1, N2, N3, N4, N6 and others are all interface serial numbers. For example, for the meanings of the interfaces in FIG. 1b, reference can be made to the meanings defined in the 3GPP (3rd Generation Partnership Project) standard protocol, which will not be specifically limited in the embodiments of the present disclosure.

It may be understood that the communication system in the embodiments of the present disclosure is intended to illustrate the technical solution in the embodiments of the present disclosure more clearly, and does not constitute a limitation on the technical solution in the embodiments of the present disclosure. Those skilled in the art may know that the technical solution in the embodiments of the present disclosure is equally applicable to similar technical problems, with the evolution of a system architecture and the emergence of a new service scene.

The embodiments of the present disclosure may be applied to the communication system 100 shown in FIG. 1a, or part of entities, but is not limited thereto. Entities in FIG. 1a are illustrative. The communication system may include all or part of the entities in FIG. 1a, or may include other entities not shown in FIG. 1a. The entities may be in any number and in any form. Connection relationships between the entities are illustrative. The entities may be unconnected or may be connected. They may be connected in any manner, for example, they may be directly connected or indirectly connected, or may be connected via a wired or wireless way.

The embodiments of the present disclosure may also be applied to the 5G communication system architecture shown in FIG. 1b. It can be understood that the embodiments of the present disclosure do not specifically limit the communication system to which the information processing method provided in this disclosure is applicable.

The embodiments of the present disclosure may be applied to long term evolution (LTE), LTE-Advanced (LTE-A), LTE-Beyond (LTE-B), SUPER 3G, IMT-Advanced, 4th generation mobile communication system (4G), 5th generation mobile communication system (5G), 5G new radio (NR), future radio access (FRA), new-radio access technology (RAT), new radio (NR), new radio access (NX), future generation radio access (FX), global system for mobile communications (GSM (registered trademark)), CDMA2000, ultra mobile broadband (UMB), IEEE 802.11 (Wi-Fi (registered trademark)), IEEE 802.16 (WiMAX (registered trademark)), IEEE 802.20, ultra-wideband (UWB), Bluetooth (registered trademark), public land mobile network (PLMN), device-to-device (D2D) system, machine to machine (M2M) system, Internet of Things (IoT) system, Vehicle-to-Everything (V2X), systems using other communication methods, next-generation systems based on them and extended from the above, etc. In addition, a combination of a plurality of systems (e.g., a combination of LTE or LTE-A with 5G) may also be applied.

The data streams of XR multimodal services have strong correlation, and in many scenarios, the data streams of this service are distributed across multiple UEs. However, the current admission control (NSAC) function used in 5GS systems cannot support the multi UE group admission function for XR multimodal services in terms of the number of activated sessions in the network. As a result, the admission control strategies for relevant UEs in the XR multimodal services are inconsistent, leading to the inability of the network to guarantee the user experience of XR multimodal services, and even to ensure the normal provision of services in specific scenarios.

Network admission control is a single UE policy, and the admission control policies of relevant UEs for XR multimodal services are inconsistent, resulting in the network being unable to guarantee the user experience of XR multimodal services, and even unable to guarantee the normal provision of services in specific scenarios.

How to effectively enhance the network slice admission control of relevant terminals or related PDU sessions in XR service scenarios, and achieve consistent admission control strategies for XR multimodal service related UEs or related PDU sessions, especially in the hierarchical NSACF architecture, has become an urgent problem to be solved.

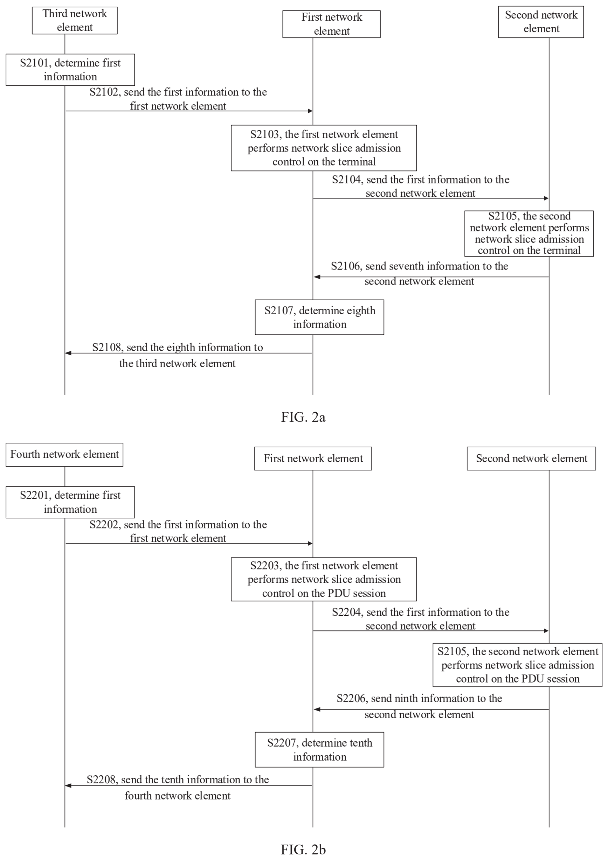

FIG. 2a is a schematic diagram illustrating interaction in an information processing method according to an embodiment of the present disclosure. As shown in FIG. 2a, the embodiment of the present disclosure relates to an information processing method, applied to the communication system 100. The method may include steps S2101 to S2108.

At step S2101, a third network element determines first information.

In some embodiments, the third network element may be an AMF.

In some embodiments, the first information may include a group identifier. For example, the first information may include a group identifier associated with the terminal.

In some embodiments, the group identifier may be configured to identify a service group or application group associated with the terminal. The service group may be an XR service group.

In some embodiments, the group identifier includes at least one of internal group identifier, standardized universal group identifier, XR application ID, or XR service capability indicator.

In some embodiments, terminals associated with the same group identifier may be linked to the same service or application.

For example, terminals associated with the group identifier of the same service group may be linked to the same XR service.

In some embodiments, the third network element may determine a first group identifier according to fifth information, and the fifth information includes at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
group information in a context of the terminal.

For example, the terminal identification may be a UE PEI (permanent equipment identifier).

For example, the group information in the context of the terminal may be sent by other AMFs different from the third network element.

At step S2102, the third network element sends the first information to a first network element.

In some embodiments, the first network element receives the first information sent by the third network element.

In some embodiments, the first network element may be an NSACF, for example, a local NSACF.

In some embodiments, the first information including the group identifier may be included in a first request. The first request may be configured to request update of a number of registered terminals. For example, the first request includes at least one of a terminal registration request, a terminal deregistration request, or an update request for the number of registered terminals.

In some examples, the first request may be Nnsacf_NSAC _NumOfUEsUpdate_Request.

In some embodiments, the first network element is configured for admission control of terminals in the service area corresponding to the first network element.

In some embodiments, the first network element is associated with at least one service area.

In some embodiments, the first information may indicate the network slice for admission operation through Single Network Slice Selection Assistance Information (S-NSSAI).

When S-NSSAI indicates that a network slice needs to perform NSAC, and the slice identifier of the network slice is in the allowed NSSAI (such as AMF requesting the UE to register with the network slice), or removed from the allowed NSSAI (AMF requesting the UE to deregister from the network slice), then AMF triggers the validity check and update process of the network slice, updating the number of registered terminals.

In some embodiments, the first information may be triggered by a registration or deregistration process initiated by the terminal for the network slice.

For example, the terminal may send a terminal registration request through the AMF, triggering the AMF to send the first information to the local NSACF. For another example, the terminal may send a terminal deregistration request through the AMF, triggering the AMF to send the first information to the local NSACF.

In some embodiments, the first information may be triggered by allowing changes in NSSAI due to switching across AMFs.

In some embodiments, the first information may be sent by the AMF to the local NSACF based on trigger by the terminal's configuration update process.

For example, the configuration update process may be triggered by the Network Slice-Specific Authentication and Authorization (NSSAA) process or the change process of subscribed S-NSSAI.

In some embodiments, the network slice admission control may trigger the first network element to update the number of terminals registered within the network slice.

In some embodiments, the update of the number of registered terminals includes one of the following: an increase in the number of terminals registered within the network slice, or a decrease in the number of terminals registered within the network slice.

In some embodiments, the first information may also include the content in the registration request information sent by the terminal, such as the terminal identifier, access type of the authorized NSSAI, relevant slice S-NSSAIs requesting execution of NSAC, AMF identifier, and/or update flag.

In some embodiments, the first information indicates performing admission control for at least one network slice on terminals associated with the group identifier.

In some embodiments, the group identifier may be configured to identify the service group or application group associated with the terminal. For example, the group identifier may be configured to identify the service group associated with the terminal requesting registration, and/or the group identifier may be configured to identify the application group associated with the terminal requesting registration.

In some embodiments, the first information may be configured to indicate network slice admission control based on the service or application group for the terminal.

In some embodiments, network slice admission control based on the service or application group may include: allowing terminals associated with the service or application group to register with the network slice; or refusing to register terminals associated with the service or application group to the network slice.

In some embodiments, if the AMF is unaware of the peer NSACF, the AMF performs NSACF discovery and selection.

At step S2103, the first network element performs network slice admission control on the terminal.

In some embodiments, the first network element performs network slice admission control on the terminal requesting registration.

In some embodiments, the first network element performs network slice admission control on the terminal requesting registration based on the maximum number of terminals or maximum group number of terminals registered with the network slice to which the terminal requests registration.

In some embodiments, if the group number of terminal registered with the network slice of the first network element does not reach the maximum group number of terminals registered with the network slice, the first network element considers the group identifier associated with the terminal to perform network slice admission control on the terminal requesting registration.

In some embodiments, the first network element allows the terminal to register with the network slice, including: accepting the registration request of the terminal in the network slice, adding the terminal to the registered list, and increasing the number of terminals registered with the network slice.

In some embodiments, if the group number of terminals registered with the network slice of the first network element does not reach the maximum group number of terminals registered with the network slice, the first network element does not send a second request including the first information to the second network element.

At step S2104, the first network element sends the first information to the second network element.

In some embodiments, the second network element receives the first information sent by the first network element.

In some embodiments, the second network element is at least configured for global management of one or more first network elements.

In some embodiments, the service area of the second network element includes the service area of the first network element. For example, the service area of the second network element is the global service area, and the service area of the first network element includes one or more service areas within the global service area.

In some embodiments, the second network element may be the primary NSACF.

In some embodiments, the first information is included in the second request sent by the first network element to the second network element. For example, the second request is an NSAC request.

In some embodiments, the first information may be configured to indicate network slice admission control for the terminal requesting registration.

In some embodiments, the first information may be configured to indicate network slice admission control for the terminal requesting deregistration.

For example, network slice admission control for the terminal requesting registration may include an increase in the number of terminals registered with the network slice.

For example, network slice admission control for the terminal requesting deregistration may include a decrease in the number of terminals registered with the network slice.

In some embodiments, in step S2104, the first network element sends the first information to the second network element, including:
the first network element sends the first information from the third network element to the second network element; and/or
the first network element sends the first information from the fourth network element to the second network element.

In some embodiments, in step S2104, the first network element sends the first information to the second network element, including:
receiving the first request sent by the third network element, wherein the first request is configured to update the number of registered terminals, and the first request includes the first information;
sending the second request to the second network element, wherein the second request includes the first information.

In some embodiments, in step S2104, the first network element sends the first information to the second network element, including at least one of the following:
if the number of terminals registered with the network slice of the first network element reaches or does not reach the maximum number of terminals registered with the network slice, the first network element sends the first information to the second network element;
if the group number of terminals registered with the network slice of the first network element reaches the maximum group number of terminals registered with the network slice, the first network element sends the first information to the second network element.

In some embodiments, if the number of terminals registered with the network slice of the first network element reaches or does not reach the maximum number of terminals registered with the network slice, the first network element sends the second request including the first information to the second network element.

In some embodiments, when the group number of terminals registered with the network slice of the first network element reaches the maximum group number of terminals registered with the network slice, the first network element sends the second request including the first information to the second network element.

Here, both the first request and the second request include the identifier of the network slice.

In some embodiments, the first information is at least configured to instruct the second network element to perform network slice admission control on the terminal requesting registration.

In some embodiments, the first information may be included in the second request sent by the first network element to the second network element. For example, the request message is the Nnscf_NSAC _NumOfUEsUpdate_Request message.

In embodiments of the present disclosure, the number of terminals registered with the network slice is the number of terminals that have registered with the network slice.

In embodiments of the present disclosure, the group number of terminals registered with the network slice is the number of terminal groups that have registered with the network slice.

At step S2105, the second network element performs network slice admission control on the terminal.

In some embodiments, the second network element performs network slice admission control on the terminal requesting registration.

In some embodiments, the second network element may perform network slice admission control on the terminal based on the global maximum number of registered terminals and the first information.

In some embodiments, the second network element determines whether to accept the NSAC request from the first network element based on the reserved quantity in the global maximum number of registered terminals and the first information.

In some embodiments, the reserved quantity is one of the following:
a terminal quota of a reserved NSAC associated with the group identifier;
a group quota of a reserved NSAC, wherein the group quota is associated with a terminal group identified by the group identifier.

In some embodiments, terminal quota (i.e., terminal quantity quota) may be the number of allowed registered terminals configured by the second network element for the network slice of the first network element.

In some embodiments, for the group identifier included in the first information, when there is a terminal quota of a reserved NSAC associated with the group identifier in the second network element, the second network element updates the number of terminals registered with the network slice, for example, by increasing the group number of terminals registered with the network slice.

In some embodiments, for the group identifier included in the first information, when there is a group quota of a reserved NSAC associated with the group identifier in the second network element, the second network element allows the terminal requesting registration to be registered in the network slice.

For example, the second network element allows the registration of the terminal requesting registration to the network slice, which may include: the second network element accepting the NSAC request from the first network element, and increasing the group number of terminals registered with the network slice.

In some embodiments, for the group identifier included in the first information, when there is no group quota of the reserved NSAC associated with the group identifier in the second network element, the second network element does not allow the terminal requesting registration to be registered in the network slice.

For example, if the second network element does not allow the terminal requesting registration to be registered in the network slice, it may include: the second network element rejects the NSAC request from the first network element and does not update the group number of terminals registered with the network slice.

At step S2106, the second network element sends seventh information to the first network element.

In some embodiments, the first network element receives the seventh information sent by the second network element.

In some embodiments, the seventh information may be configured to indicate whether to allow registration of the terminal to the network slice.

In some embodiments, the seventh information may be included in the first response sent by the second network element to the first network element. For example, the response message may be an Nnsacf_NSAC_NumOfUEsUpdate_Response message.

In some embodiments, the first response includes second information, and the second information is configured to update the maximum number of terminals registered in the network slice of the first network element.

In some embodiments, if the second network element determines to adjust the configuration value stored on the first network element, the updated information of the configuration value may be included in the seventh information.

In some embodiments, the configuration value may be the maximum number of terminals registered in the network slice of the first network element, and/or the maximum group number of terminals registered in the network slice of the first network element.

In some embodiments, the updated information of the configuration value may be used to indicate an increase in the maximum number of registered terminals and/or the maximum group number of registered terminals, or the updated information of the configuration value may be used to indicate a decrease in the maximum number of registered terminals and/or the maximum group number of registered terminals.

In some embodiments, the second information may be replaced with the seventh information.

At step S2107, the first network element determines eighth information.

In some embodiments, if the seventh information from the second network element includes the updated configuration value, the first network element performs NSAC on the terminal requesting registration based on the received update information to obtain the eighth information.

For example, based on the updated configuration value, NSAC is performed on the PDU session for the specified network slice according to the group identifier associated with the PDU session (XR group ID or XR service ID).

In some embodiments, the eighth information may be configured to represent the result of the first network element performing NSAC on the terminal. For example, the eighth information indicates permission to register the terminal to the network slice, or refusal to register the terminal to the network slice.

In some embodiments, if the seventh information from the second network element does not contain updated information of the configuration value, the seventh information is returned to the third network element as the eighth information.

At step S2108, the first network element sends the eighth information to the third network element.

In some embodiments, the third network element receives the eighth information sent by the first network element.

In some embodiments, the eighth information may be included in a response message sent by the first network element to the third network element. For example, the response message may be an Nnsacf_NSAC _NumOfUEsUpdate_Response message.

In some examples, the response message sent by the first network element to the third network element includes a slice identifier S-NSSAI(s) and a result indication, which indicates whether the number of registered terminals in the network slice has reached the maximum number of registered terminals. Optionally, the result indication may be used to indicate whether the number of terminals registered with the network slice has reached the maximum number of terminals.

In some embodiments, the slice identifier S-NSSAI(s) included in the response message may include at least one of:
the identifier of the network slice that allows terminal registration; or
the identifier of the network slice that rejects terminal registration.

In some embodiments, if the first network element sends to the third network element that the number of terminals or the group number of terminal registered with the network slice has reached the maximum allowed value, the fourth network element may reject the terminal registration request, for example, by setting the rejection reason to "the allowed number of registered terminals for the slice has been reached", or by setting the rejection reason to "the allowed number of terminal groups for the slice has been reached".

In some embodiments, the term 'information' may be interchangeable with terms such as' message', 'signal', 'signaling', 'report', 'configuration', 'indication', 'instruction', 'command', 'channel', 'parameter', 'field', 'data', etc.

In some embodiments, the term 'send' may be interchangeable with terms such as 'transmit', 'report', 'emit', etc.

The information processing method disclosed in embodiments of the present disclosure may include at least one of steps S2101 to S2108. For example, step S2101 can be implemented as an independent embodiment, step S2103 can be implemented as an independent embodiment, and step S2104 can be implemented as an independent embodiment. For example, steps S2101 to S2103 combined with step S2108 can be implemented as an independent embodiment, steps S2104 to S2108 can be implemented as an independent embodiment, and steps S2101 to S2108 can be implemented as an independent embodiment, but are not limited to these.

In some embodiments, steps S2101, S2102, and S2103 are optional, and one or more of these steps may be omitted or replaced in different embodiments.

In embodiments of the present disclosure, some or all of the steps and their optional implementations may be combined with any of the steps in other embodiments, or with any of the optional implementations in other embodiments.

FIG. 2b is a schematic diagram illustrating interaction in an information processing method according to an embodiment of the present disclosure. As shown in FIG. 2b, an embodiment of the present disclosure relates to an information processing method, applied in the communication system 100. The method may include steps S2201 to S2208.

At step S2201, a fourth network element determines first information.

In some embodiments, the fourth network element may be an SMF.

In some embodiments, the first information may include a group identifier. For example, the first information may include a group identifier associated with the PDU session.

In some embodiments, the group identifier may be configured to identify a service group or application group associated with the PDU session. For example, the group identifier is configured to identify the service group associated with the PDU session requesting activation, or the group identifier is configured to identify the application group associated with the PDU session requesting activation.

In some embodiments, the service group may be an XR service group.

In some embodiments, the group identifier includes at least one of internal group identifier, standardized universal group identifier, XR application ID, or XR service capability indicator.

In some embodiments, PDU sessions associated with the same group identifier may be linked to the same service or application.

For example, PDU sessions associated with the group identifier of the same service group may be linked to the same XR service.

In some embodiments, the third network element may determine a first group identifier according to sixth information, and the sixth information includes at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
group information in a context of the terminal.

For example, the terminal identification may be a UE PEI (permanent equipment identifier).

For example, the indication information of XR multimodal service capabilities may be sent by the RAN or AMF.

At step S2202, the fourth network element sends the first information to a first network element.

In some embodiments, the first network element receives the first information sent by the fourth network element.

In some embodiments, the first network element may be an NSACF, for example, a local NSACF.

In some embodiments, the first information including the group identifier may be included in a third request sent by the fourth network element to the first network element. For example, the third request is configured to update a number of activated PDU sessions.

In some examples, the first request may be nsacf_nsac_numofpdusupdate_request.

In some embodiments, at the beginning of the new PDU session establishment process or after a PDU session is successfully released, the fourth network element may be triggered to send the first information, or the fourth network element may trigger the slice that needs to perform NSAC to send the first information to the first network element.

In some embodiments, the first network element is configured for admission control of PDU sessions in the service area corresponding to the first network element.

In some embodiments, the first network element is associated with at least one service area.

In some embodiments, the first information may be configured to indicate network slice admission control for the PDU session that requests activation.

In some embodiments, the first information may be configured to indicate network slice admission control for the PDU session that requests deactivation.

In some embodiments, the first information may also include UE ID, session ID, slice identification or identification list S-NSSAI(s) that requires NSAC, access type, and update flag. The update flag is used to indicate whether the number of sessions is increasing, decreasing, or updating.

For example, it increases during the session establishment process or when a new access is made to an existing multi access session, decreases after the session release process or when a certain access is released from an existing multi access session, and updates when indicating an update to the access type of an existing PDU session.

At step S2203, the first network element performs network slice admission control on the PDU session.

In some embodiments, the first network element performs network slice admission control on the PDU session requesting activation.

In some embodiments, the first network element performs network slice admission control on the PDU session requesting deactivation.

In some embodiments, the first network element performs network slice admission control on the PDU session requesting activation based on the maximum number of PDU sessions or maximum group number of PDU sessions registered in the network slice to which the PDU session requests to be registered.

In some embodiments, if the group number of PDU sessions in the network slice of the first network element does not reach the maximum group number of PDU sessions in the network slice, the first network element considers the group identifier associated with the PDU session to perform network slice admission control on the PDU session requesting activation.

In some embodiments, the first network element allows the activation of the PDU session to the network slice, including: accepting an activation request of the PDU session in the network slice, adding the PDU session to the activated list, and increasing the number of activated PDU sessions in the network slice.

In some embodiments, if the group number of PDU sessions in the network slice of the first network element does not reach the maximum group number of PDU sessions in the network slice, the first network element does not send a fourth request including the first information to the second network element.

At step S2204, the first network elements sends the first information to a second network element.

In some embodiments, the second network element receives the first information sent by the first network element.

In some embodiments, the second network element is at least configured for global management of one or more first network elements.

In some embodiments, the service area of the second network element includes the service area of the first network element. For example, the service area of the second network element is the global service area, and the service area of the first network element includes one or more service areas within the global service area.

In some embodiments, the second network element may be the primary NSACF.

In some embodiments, the first information is included in the fourth request sent by the first network element to the second network element. For example, the fourth request is an NSAC request.

In some embodiments, in step S2204, the first network element sends the first information to the second network element, including:
receiving a third request including the first information sent by a fourth network element;
sending the fourth request from the first network element to the second network element, wherein the third request is configured to update the number of activated PDU sessions, and the third request includes the first information.

In some embodiments, in step S2204, the first network element sends the first information to the second network element, including:
if the number of PDU sessions in the network slice of the first network element reaches or does not reach the maximum number of PDU sessions in the network slice, the first network element sends the first information to the second network element;
if the group number of PDU sessions in the network slice of the first network element reaches the maximum group number of PDU sessions in the network slice, the first network element sends the first information to the second network element.

In some embodiments, if the number of PDU sessions in the network slice of the first network element reaches or does not reach the maximum number of DPU sessions in the network slice, the first network element sends the fourth request including the first information to the second network element.

In some embodiments, when the group number of PDU sessions in the network slice of the first network element reaches the maximum group number of PDU sessions the network slice, the first network element sends the fourth request including the first information to the second network element.

Here, both the third request and the fourth request include the identifier of the network slice.

In some embodiments, the first information is at least configured to instruct the second network element to perform network slice admission control on the PDU session requesting activation.

In some embodiments, the first information may be configured to indicate network slice admission control on the PDU session requesting deactivation.

For example, network slice admission control for the PDU session requesting activation may include an increase in the number of activated PDU sessions in the network slice.

For example, network slice admission control for the PDU session requesting deactivation may include a decrease in the number of activated PDU sessions in the network slice.

In some embodiments, the first information may be included in the fourth request sent by the first network element to the second network element. For example, the request message is the Nnsacf_NSAC_NumOfPDUsUpdate_Request message.

In embodiments of the present disclosure, the number of PDU sessions in the network slice is the number of PDU sessions that have been activated in the network slice.

In embodiments of the present disclosure, the group number of PDU sessions in the network slice is the number of PDU session groups that have been activated in the network slice.

At step S2205, the second network element performs network slice admission control on the PDU session.

In some embodiments, the second network element performs network slice admission control on the PDU session requesting activation.

In some embodiments, the second network element may perform network slice admission control on the PDU session based on the global maximum number of PDU sessions and the first information.

In some embodiments, the second network element determines whether to accept the NSAC request from the first network element based on the reserved quantity in the global maximum number of PDU sessions and the first information.

In some embodiments, the reserved quantity is one of the following:
a PDU session quota of a reserved NSAC associated with the group identifier;
a group quota of a reserved NSAC, wherein the group quota is associated with a PDU session group identified by the group identifier.

In some embodiments, the PDU session quota (i.e., PDU session quantity quota) may be the number of allowed activated PDU sessions configured by the second network element for the network slice of the first network element.

In some embodiments, for the group identifier included in the first information, when there is a group quota of a reserved NSAC associated with the group identifier in the second network element, the second network element allows the activation of the PDU session requesting activation to the network slice.

For example, the second network element allows the activation of the PDU session requesting activation to the network slice, which may include: the second network element accepting the NSAC request from the first network element, and increasing the group number of PDU sessions in the network slice.

In some embodiments, for the group identifier included in the first information, when there is no group quota of the reserved NSAC associated with the group identifier in the second network element, the second network element does not allow the PDU session requesting activation to be activated in the network slice.

For example, if the second network element does not allow the PDU session requesting activation to be activated in the network slice, it may include: the second network element rejects the NSAC request from the first network element and does not update the group number of PDU sessions in the network slice.

At step S2206, the second network element sends ninth information to the first network element.

In some embodiments, the first network element receives the ninth information sent by the second network element.

In some embodiments, the ninth information may be configured to indicate whether to allow activation of the PDU session to the network slice.

In some embodiments, the ninth information may be included in a second response sent by the second network element to the first network element. For example, the second response may be an Nnsacf_NSAC_NumOfPDUsUpdate_Response message.

In some embodiments, the second response includes third information, and the third information is configured to update the maximum number of PDU sessions in the network slice of the first network element.

In some embodiments, if the second network element determines to adjust the configuration value stored on the first network element, the updated information of the configuration value may be included in the ninth information.

In some embodiments, the configuration value may be the maximum number of PDU sessions in the network slice of the first network element, and/or the maximum group number of PDU sessions in the network slice of the first network element.

In some embodiments, the update information of the configuration value may be configured to indicate an increase in the maximum number of PDU sessions and/or the maximum group number of PDU sessions, or the update information of the configuration value may be configured to indicate a decrease in the maximum number of PDU sessions and/or the maximum group number of PDU sessions.

In some embodiments, the third information may be interchangeable with the ninth information.

At step S2207, the first network element determines tenth information.

In some embodiments, if the ninth information from the second network element includes the updated configuration value, the first network element performs NSAC on the PDU session requesting activation based on the received update information to obtain the tenth information.

For example, based on the updated configuration value, NSAC is performed on the terminal for the specified network slice according to the group identifier associated with the terminal (XR group ID or XR service ID).

In some embodiments, the tenth information may be configured to represent the result of the first network element performing NSAC on the PDU session. For example, the tenth information indicates permission to activate the PDU session to the network slice, or refusal to activate the PDU session to the network slice.

In some embodiments, if the ninth information from the second network element does not contain update information of the configuration value, the ninth information is returned to the fourth network element as the tenth information.

At step S2208, the first network elements sends the tenth information to the fourth network element.

In some embodiments, the fourth network element receives the tenth information sent by the first network element.

In some embodiments, the tenth information may be included in a response message sent by the first network element to the fourth network element. For example, the response message may be an Nnsacf_NSAC_NumOfPDUsUpdate_Response message.

In some examples, the response message sent by the first network element to the fourth network element includes a slice identifier S-NSSAI(s) and a result indication, which indicates whether the number of activated PDU sessions in the network slice has reached the maximum number of activated PDU sessions. Optionally, the result indication may be used to indicate whether the number of activated PDU sessions in the network slice has reached the maximum number of PDU sessions.

In some embodiments, the slice identifier S-NSSAI(s) included in the response message may include at least one of:
the identifier of the network slice that allows PDU session activation; or
the identifier of the network slice that rejects PDU session activation.

In some embodiments, if the first network element sends to the fourth network element that the number of activated PDU sessions or the group number of PDU sessions in the network slice has reached the maximum allowed value, the fourth network element may reject the session establishment request, for example, by setting the rejection reason to "the allowed number of sessions in the slice has been reached", or by setting the rejection reason to "the allowed number of session groups for the slice has been reached".

The information processing method disclosed in embodiments of the present disclosure may include at least one of steps S2201 to S2208. For example, step S2201 can be implemented as an independent embodiment, step S2203 can be implemented as an independent embodiment, and step S2204 can be implemented as an independent embodiment. For example, steps S2201 to S2203 combined with step S2208 can be implemented as an independent embodiment, steps S2204 to S2208 can be implemented as an independent embodiment, and steps S2201 to S2208 can be implemented as an independent embodiment, but are not limited to these.

In some embodiments, steps S2201, S2202, and S2203 are optional, and one or more of these steps may be omitted or replaced in different embodiments.

In embodiments of the present disclosure, some or all of the steps and their optional implementations may be combined with any of the steps in other embodiments, or with any of the optional implementations in other embodiments.

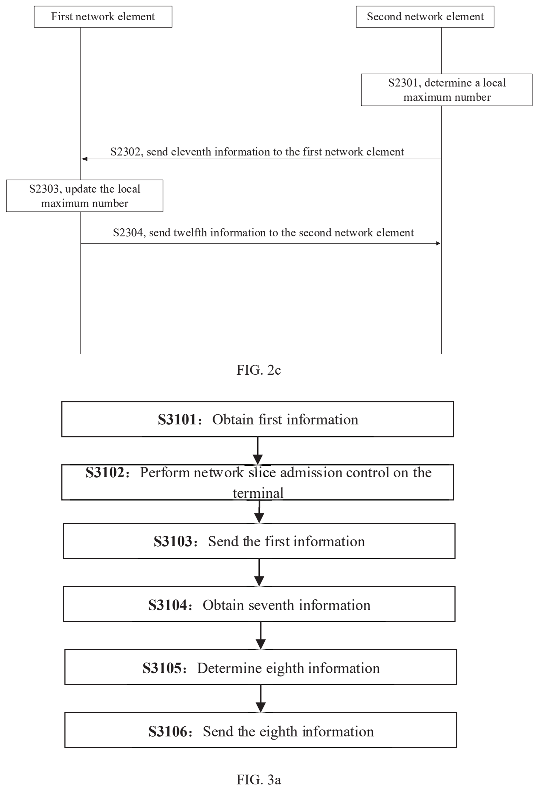

FIG. 2c is a schematic diagram illustrating interaction in an information processing method according to an embodiment of the present disclosure. As shown in FIG. 2c, an embodiment of the present disclosure relates to an information processing method, applied in the communication system 100. The method may include steps S2301 to S2304.

At step S2301, a second network element determines to update a local maximum number.

In some embodiments, the second network element is at least configured for global management of one or more first network elements.

In some embodiments, the service area of the second network element includes the service area of the first network element. For example, the service area of the second network element is the global service area, and the service area of the first network element includes one or more service areas within the global service area.

In some embodiments, the second network element may be the primary NSACF, and the first network element may be the local NSACF.

In some embodiments, the local maximum number may be the local maximum number of terminal groups or the local maximum number of PDU session groups. For example, the primary NSACF as the second network element determines to update the maximum number of terminal groups or maximum number of PDU session groups of the local NSACF as the first network element.

In some embodiments, the local maximum number configured by the second network element for the first network element may be based on one of the currently registered terminal groups and PDU session groups of the first network element, as well as the operator's policy configuration.

In some embodiments, the updated local maximum number of groups may be higher or lower than the current local maximum number of groups.

In some embodiments, the second network element may update the local maximum number of terminal groups and/or local maximum number of PDU session groups allocated to the first network element at any time.

In some embodiments, the second network element may update the NSAC quota based on the remaining quota or used quota in the NSAC quota.

In some embodiments, the NSAC quota is configured to indicate at least one of the maximum group number of registered terminals or the maximum group number of PDU sessions in the network slice of the first network element.

In some embodiments, the second network element may determine to update the local maximum number based on the fourth information sent by the first network element.

In some embodiments, the fourth information is configured to indicate the remaining quota or used quota in the NSAC quota allocated by the second network element to the first network element.

In some embodiments, the second network element receives the fourth information sent by the first network element.

In some embodiments, the second network element receives the fourth information sent by the first network element based on the subscription request from the second network element, wherein the subscription request is configured to subscribe the remaining quota or the used quota in the NSAC quota from the first network element.

For example, the fourth information may be sent by the first network element to the second network element based on the subscription request when there is a change in the remaining or used quota.

For example, the fourth information may be periodically sent by the first network element to the second network element based on the subscription request.

At step S2302, the second network element sends eleventh information to the first network element.

In some embodiments, the first network element receives the eleventh information sent by the second network element.

In some embodiments, the eleventh information includes update information on the local maximum number of terminal groups or the local maximum number of PDU session groups. For example, the eleventh information includes the new local maximum number of terminal groups or the new local maximum number of PDU session groups.

In some embodiments, the eleventh information is included in the fifth request sent by the second network element to the first network element. The fifth request may be, for example, an Nnsafcf_NSAC_LocalNumberUpdate request.

At step S2303, the first network element updates the local maximum number.

In some embodiments, the first network element updates the local maximum number of terminal groups or the local maximum number of PDU session groups based on the update information on the local maximum number of terminal groups or the local maximum number of PDU session groups included in the eleventh information.

For example, the local NSACF replaces the original local maximum number of terminal groups with the received new local maximum number of terminal groups. Alternatively, for example, the local NSACF replaces the original local maximum number of PDU session groups with the received new local maximum number of PDU session groups.

At step S2304, the first network elements sends twelfth information to the second network element.

In some embodiments, the second network element receives the twelfth information sent by the first network element.

In some embodiments, the twelfth information is included in the response sent by the first network element to the second network element. The response may be, for example, an Nnsacf_NSAC_LocalNumberUpdate response returned by the NSACF to the primary NSACF.

The information processing method disclosed in embodiments of the present disclosure may include at least one of steps S2301 to S2304. For example, step S2302 can be implemented as an independent embodiment, and step S2303 can be implemented as an independent embodiment. For example, step S2301 combined with step S2304 can be implemented as an independent embodiment, and steps S2302 to S2304 can be implemented as an independent embodiment.

In some embodiments, steps S2301 is optional, and one or more of these steps may be omitted or replaced in different embodiments.

In embodiments of the present disclosure, some or all of the steps and their optional implementations may be combined with any of the steps in other embodiments, or with any of the optional implementations in other embodiments.

FIG. 3a is a schematic flowchart of an information processing method according to an embodiment of the present disclosure. As shown in FIG. 3a, an embodiment of the present disclosure relates to an information processing method, performed by a first network element. The method includes steps S3101 to S3106.

At step S3101, first information is obtained.

In some embodiments, for optional implementations of step S3101, reference may be made to optional implementations of step S2102 in FIG. 2a, as well as other related parts in the embodiments involved in FIG. 2a, which will not be repeated here.

In some embodiments, the first network element receives the first information sent by the third network element, but is not limited to this, and may also receive the first information sent by other entities.

In some embodiments, the first information includes a group identifier.

In some embodiments, obtaining the first information in step S3101 may include at least one of the following:
the first network element receives the group identifier sent by the fifth network element;
the first network element determines the group identifier based on local configuration information and/or OAM configuration information. For example, the fifth network element may be used for policy control, and may be a PCF or NEF network element. For example, the local NSACF receives the group identifier sent by the PCF.

In some embodiments, the first network element receives the group identifier sent by the fifth network element, including at least one of the following:
in the absence of receiving the group identifier sent by the third network element, the first network element receives the group identifier from the fifth network element;
in the case where the first request sent by the third network element does not include the group identifier, the first network element receives the group identifier from the fifth network element.

In some embodiments, the first network element determines the group identifier based on local configuration information and/or OAM configuration information, including at least one of the following:
in the absence of receiving the group identifier sent by the third network element, the first network element determines the group identifier based on local configuration information and/or OAM configuration information;
in the case where the first request sent by the third network element does not include the group identifier, the first network element determines the group identifier based on local configuration information and/or OAM configuration information.

In some embodiments, the group identifier may include a first group identifier. The first group identifier is configured to identify the service group or application group associated with the terminal.

In some embodiments, the first network element obtains the first information specified by the protocol.

In some embodiments, the first network element obtains the first information from the upper layer(s).

In some embodiments, the first network element processes to obtain the first information.

In some embodiments, step S3101 is omitted, and the first network element autonomously implements the function indicated by the first information, or the above function is default or defaulted.

At step S3102, network slice admission control is performed on the terminal.

In some embodiments, for optional implementations of step S3102, reference may be made to optional implementations of step S2103 in FIG. 2a, as well as other related parts in the embodiments involved in FIG. 2a, which will not be repeated here.

At step S3103, the first information is sent.

In some embodiments, for optional implementations of step S3103, reference may be made to optional implementations of step S2104 in FIG. 2a, as well as other related parts in the embodiments involved in FIG. 2a, which will not be repeated here.

In some embodiments, the first network element sends the first information to the second network element, but not limited to this, and may also send the first information to other entities.

Optionally, the first information mentioned above is configured to instruct the second network element to perform network slice admission control on the terminal. For optional implementations, reference can be made to the optional implementations of step S2105 in FIG. 2a, as well as other related parts in the embodiments involved in FIG. 2a, which will not be repeated here.

In some embodiments, regardless of whether the group identifier contained in the first information comes from the third network element, the first network element can send the first information including the group identifier to the second network element. For example, the first information is included in the second request sent by the first network element to the second network element. The second request may be an NSAC request.

At step S3104, seventh information is obtained.

In some embodiments, for optional implementations of step S3104, reference may be made to optional implementations of step S2106 in FIG. 2a, as well as other related parts in the embodiments involved in FIG. 2a, which will not be repeated here.

In some embodiments, the first network element receives the seventh information sent by the second network element, but is not limited to this, and may also receive the seventh information sent by other entities.

In some embodiments, the first network element obtains the seventh information specified by the protocol.

In some embodiments, the first network element obtains the seventh information from the upper layer(s).

In some embodiments, the first network element processes to obtain the seventh information.

In some embodiments, step S3104 is omitted, and the first network element autonomously implements the function indicated by the seventh information, or the above function is default or defaulted.

At step S3105, eighth information is determined.

In some embodiments, for optional implementations of step S3105, reference may be made to optional implementations of step S2107 in FIG. 2a, as well as other related parts in the embodiments involved in FIG. 2a, which will not be repeated here.

At step S3106, the eighth information is sent.

In some embodiments, for optional implementations of step S3106, reference may be made to optional implementations of step S2108 in FIG. 2a, as well as other related parts in the embodiments involved in FIG. 2a, which will not be repeated here.

In some embodiments, the first network element sends the eighth information to the third network element, but is not limited to this, and may also send the eighth information to other entities.

The information processing method disclosed in embodiments of the present disclosure may include at least one of steps S3101 to S3106. For example, steps S3101 can be implemented as an independent embodiment, and step S3103 can be implemented as an independent embodiment. For example, steps S3101 to S3102 can be implemented as an independent embodiment, steps S3103 to S3105 can be implemented as an independent embodiment, and steps S3101 to S3106 can be implemented as an independent embodiment, but is limited to these.

In some embodiments, steps S3101, S3102 and S3106 are optional, and one or more of these steps may be omitted or replaced in different embodiments.

In embodiments of the present disclosure, some or all of the steps and their optional implementations may be combined with any of the steps in other embodiments, or with any of the optional implementations in other embodiments.

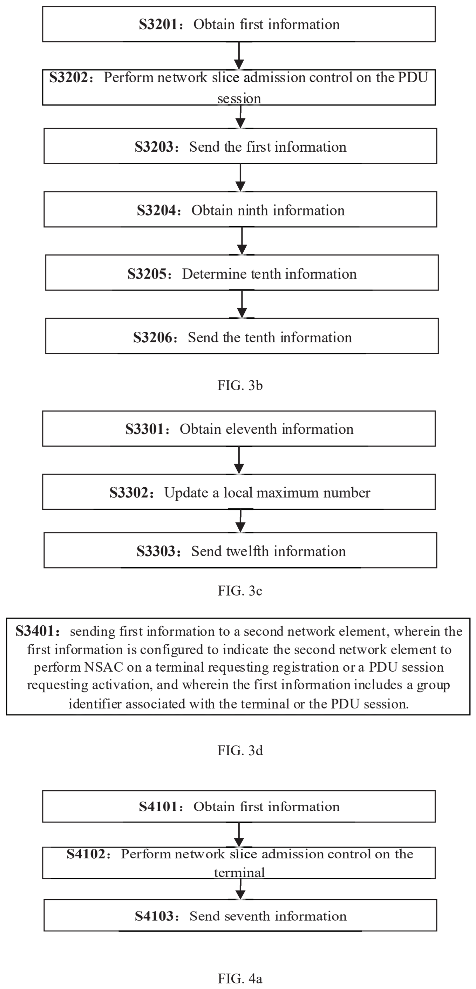

FIG. 3b is a schematic flowchart of an information processing method according to an embodiment of the present disclosure. As shown in FIG. 3b, an embodiment of the present disclosure relates to an information processing method, performed by a first network element. The method includes steps S3201 to S3206.

At step S3201, first information is obtained.

In some embodiments, for optional implementations of step S3201, reference may be made to optional implementations of step S2202 in FIG. 2b, as well as other related parts in the embodiments involved in FIG. 2b, which will not be repeated here.

In some embodiments, the first network element receives the first information sent by the fourth network element, but is not limited to this, and may also receive the first information sent by other entities.

In some embodiments, the first information includes a group identifier.

In some embodiments, obtaining the first information in step S3201 may include at least one of the following:
the first network element receives the group identifier sent by the fifth network element;
the first network element determines the group identifier based on local configuration information and/or OAM configuration information. For example, the fifth network element may be used for policy control, and may be a PCF or NEF network element. For example, the local NSACF receives the group identifier sent by the PCF.

In some embodiments, the first network element receives the group identifier sent by the fifth network element, including at least one of the following:
in the absence of receiving the group identifier sent by the fourth network element, the first network element receives the group identifier from the fifth network element;
in the case where the third request sent by the fourth network element does not include the group identifier, the first network element receives the group identifier from the fifth network element.

In some embodiments, the first network element determines the group identifier based on local configuration information and/or OAM configuration information, including at least one of the following:
in the absence of receiving the group identifier sent by the fourth network element, the first network element determines the group identifier based on local configuration information and/or OAM configuration information;
in the case where the third request sent by the fourth network element does not include the group identifier, the first network element determines the group identifier based on local configuration information and/or OAM configuration information.

In some embodiments, the group identifier may include a second group identifier. The second group identifier is configured to identify the service group or application group associated with the PDU session. In some embodiments, the first network element obtains the first information specified by the protocol.

In some embodiments, the first network element obtains the first information from the upper layer(s).

In some embodiments, the first network element processes to obtain the first information.

In some embodiments, step S3201 is omitted, and the first network element autonomously implements the function indicated by the first information, or the above function is default or defaulted.

At step S3202, network slice admission control is performed on the PDU session.

In some embodiments, for optional implementations of step S3202, reference may be made to optional implementations of step S2203 in FIG. 2b, as well as other related parts in the embodiments involved in FIG. 2b, which will not be repeated here.

At step S3203, the first information is sent.

In some embodiments, for optional implementations of step S3203, reference may be made to optional implementations of step S2204 in FIG. 2b, as well as other related parts in the embodiments involved in FIG. 2b, which will not be repeated here.

In some embodiments, the first network element sends the first information to the second network element, but not limited to this, and may also send the first information to other entities.

Optionally, the first information mentioned above is configured to instruct the second network element to perform network slice admission control on the terminal. For optional implementations, reference can be made to the optional implementations of step S2205 in FIG. 2b, as well as other related parts in the embodiments involved in FIG. 2b, which will not be repeated here.

In some embodiments, regardless of whether the group identifier contained in the first information comes from the fourth network element, the first network element can send the first information including the group identifier to the second network element. For example, the first information is included in the fourth request sent by the first network element to the second network element. The fourth request may be an NSAC request.

At step S3204, ninth information is obtained.

In some embodiments, for optional implementations of step S3204, reference may be made to optional implementations of step S2206 in FIG. 2b, as well as other related parts in the embodiments involved in FIG. 2b, which will not be repeated here.

In some embodiments, the first network element receives the ninth information sent by the second network element, but is not limited to this, and may also receive the ninth information sent by other entities.

In some embodiments, the first network element obtains the ninth information specified by the protocol.

In some embodiments, the first network element obtains the ninth information from the upper layer(s).

In some embodiments, the first network element processes to obtain the ninth information.

In some embodiments, step S3204 is omitted, and the first network element autonomously implements the function indicated by the ninth information, or the above function is default or defaulted.

At step S3205, tenth information is determined.

In some embodiments, for optional implementations of step S3205, reference may be made to optional implementations of step S2207 in FIG. 2b, as well as other related parts in the embodiments involved in FIG. 2b, which will not be repeated here.

At step S3206, the eighth information is sent.

In some embodiments, for optional implementations of step S3206, reference may be made to optional implementations of step S2208 in FIG. 2b, as well as other related parts in the embodiments involved in FIG. 2b, which will not be repeated here.

In some embodiments, the first network element sends the tenth information to the third network element, but is not limited to this, and may also send the tenth information to other entities.

The information processing method disclosed in embodiments of the present disclosure may include at least one of steps S3201 to S3206. For example, steps S3201 can be implemented as an independent embodiment, and step S3203 can be implemented as an independent embodiment. For example, steps S3201 to S3202 can be implemented as an independent embodiment, steps S3203 to S3205 can be implemented as an independent embodiment, and steps S3201 to S3206 can be implemented as an independent embodiment, but is limited to these.

In some embodiments, steps S3201, S3202 and S3206 are optional, and one or more of these steps may be omitted or replaced in different embodiments.

In embodiments of the present disclosure, some or all of the steps and their optional implementations may be combined with any of the steps in other embodiments, or with any of the optional implementations in other embodiments.

FIG. 3c is a schematic flowchart of an information processing method according to an embodiment of the present disclosure. As shown in FIG. 3c, an embodiment of the present disclosure relates to an information processing method, performed by a first network element. The method includes steps S3301 to S3303.

At step S3301, eleventh information is obtained.

In some embodiments, for optional implementations of step S3301, reference may be made to optional implementations of step S2302 in FIG. 2c, as well as other related parts in the embodiments involved in FIG. 2c, which will not be repeated here.

In some embodiments, the first network element receives the eleventh information sent by the second network element, but is not limited to this, and may also receive the eleventh information sent by other entities.

In some embodiments, the first network element obtains the eleventh information specified by the protocol.

In some embodiments, the first network element obtains the eleventh information from the upper layer(s).

In some embodiments, the first network element processes to obtain the eleventh information.

In some embodiments, step S3204 is omitted, and the first network element autonomously implements the function indicated by the eleventh information, or the above function is default or defaulted.

At step S3302, a local maximum number is updated.

In some embodiments, for optional implementations of step S3302, reference may be made to optional implementations of step S2303 in FIG. 2c, as well as other related parts in the embodiments involved in FIG. 2c, which will not be repeated here.

At step S3303, twelfth information is sent.

In some embodiments, for optional implementations of step S3303, reference may be made to optional implementations of step S2304 in FIG. 2c, as well as other related parts in the embodiments involved in FIG. 2c, which will not be repeated here.

In some embodiments, the first network element sends the twelfth information to the second network element, but is not limited to this, and may also send the twelfth information to other entities.

The information processing method disclosed in embodiments of the present disclosure may include at least one of steps S3301 to S3303. For example, steps S3301 can be implemented as an independent embodiment, and step S3302 can be implemented as an independent embodiment. For example, steps S3301 to S3302 can be implemented as an independent embodiment, and steps S3301 to S3303 can be implemented as an independent embodiment, but is limited to these.

In some embodiments, steps S3301 and S3303 are optional, and one or more of these steps may be omitted or replaced in different embodiments.

FIG. 3d is a schematic flowchart of an information processing method according to an embodiment of the present disclosure. As shown in FIG. 3d, an embodiment of the present disclosure relates to an information processing method, performed by a first network element. The method includes the following steps.

At step S3401, first information is sent to a second network element, wherein the first information is configured to indicate the second network element to perform NSAC on a terminal requesting registration or a PDU session requesting activation, and wherein the first information includes a group identifier associated with the terminal or the PDU session.

In some embodiments, in step S3401, sending the first information to the second network element includes:
step S3401a, receiving a first request including the first information sent by a third network element; and
step S3401b, sending a second request including the first information to the second network element, wherein the first request is configured to update a number of registered terminals.

In some embodiments, for optional implementations of step S3401a, reference may be made to optional implementations of step S2102 in FIG. 2a and optional implementations of step S3101 in FIG. 3a, as well as other related parts in the embodiments involved in FIG. 2a and FIG. 3a, which will not be repeated here.

In some embodiments, for optional implementations of step S3401b, reference may be made to optional implementations of step S2104 in FIG. 2a and optional implementations of step S3103 in FIG. 3a, as well as other related parts in the embodiments involved in FIG. 2a and FIG. 3a, which will not be repeated here.

In some embodiments, in step S3401, sending the first information to the second network element includes:
step S3401c, receiving a third request including the first information and sent by a fourth network element; and
step S3401d, sending a fourth request including the first information to the second network element, wherein the third request is configured to update a number of activated PDU sessions.

In some embodiments, for optional implementations of step S3401c, reference may be made to optional implementations of step S2202 in FIG. 2b and optional implementations of step S3201 in FIG. 3b, as well as other related parts in the embodiments involved in FIG. 2b and FIG. 3b, which will not be repeated here.

In some embodiments, for optional implementations of step S3401d, reference may be made to optional implementations of step S2204 in FIG. 2b and optional implementations of step S3203 in FIG. 3b, as well as other related parts in the embodiments involved in FIG. 2b and FIG. 3b, which will not be repeated here.

In some embodiments, in step S3401b, sending the second request including the first information to the second network element includes:
sending the second request including the first information to the second network element in a case where a number of terminals registered with a network slice of the first network element reaches or does not reach a maximum number of terminals registered with the network slice.

In some embodiments, in step S3401b, sending the second request including the first information to the second network element includes:
sending the second request including the first information to the second network element in a case where a group number of terminals registered with a network slice of the first network element reaches a maximum group number of terminals registered with the network slice.

In some embodiments, in step S3401d, sending the fourth request including the first information to the second network element includes:
sending the fourth request including the first information to the second network element in a case where a number of PDU sessions in a network slice of the first network element reaches a maximum number of PDU sessions in the network slice.

In some embodiments, in step S3401d, sending the fourth request including the first information to the second network element includes:
sending the fourth request including the first information to the second network element in a case where a group number of PDU sessions in a network slice of the first network element reaches a maximum group number of PDU sessions in the network slice.

In some embodiments, in step S3401, sending the first information to the second network element includes:
sending the first information to the second network element in a case where a number of PDU sessions in a network slice of the first network element reaches or does not reach a maximum number of PDU sessions in the network slice; and/or
sending the first information to the second network element in a case where a group number of PDU sessions in a network slice of the first network element reaches a maximum group number of PDU sessions in the network slice.

In some embodiments, the method further includes at least one of:
step S3402, receiving a first response corresponding to the second request and sent by the second network element, wherein the first response includes second information, and the second information is configured to update a maximum number of terminals registered with a network slice of the first network element; or
step S3403, receiving a second response corresponding to the fourth request and sent by the second network element, wherein the second response includes third information, and the third information is configured to update a maximum number of PDU sessions in a network slice of the first network element.

In some embodiments, for optional implementations of step S3402, reference may be made to optional implementations of step S2106 in FIG. 2a and optional implementations of step S3104 in FIG. 3a, as well as other related parts in the embodiments involved in FIG. 2a and FIG. 3a, which will not be repeated here.

In some embodiments, for optional implementations of step S3403, reference may be made to optional implementations of step S2206 in FIG. 2b and optional implementations of step S3204 in FIG. 3b, as well as other related parts in the embodiments involved in FIG. 2b and FIG. 3b, which will not be repeated here.

In some embodiments, the method further includes:
step S3404, sending fourth information to the second network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

In some embodiments, for optional implementations of step S3404, reference may be made to optional implementations of step S2301 in FIG. 2c, as well as other related parts in the embodiments involved in FIG. 2c, which will not be repeated here.

In some embodiments, in step S3404, sending the fourth information to the second network element includes:
sending the fourth information to the second network element according to a subscription request from the second network element, wherein the subscription request is configured to subscribe the remaining quota or the used quota in the NSAC quota from the first network element.

In some embodiments, the first network element is a local NSACF network element, and the second network element is a primary NSACF network element;
the third network element is an AMF network element, and the fourth network element is an SMF network element.

In some embodiments, the method further includes at least one of:
step S3405, determining the group identifier based on local configuration information and/or operations, administration and maintenance (OAM) configuration information of the first network element; or
step S3406, receiving the group identifier sent by a fifth network element.

In some embodiments, for optional implementations of steps S3405 and S3406, reference may be made to optional implementations of step S3101 in FIG. 3a and optional implementations of step S3201 in FIG. 3b, as well as other related parts in the embodiments involved in FIG. 3a and FIG. 3b, which will not be repeated here.

In some embodiments, the group identifier is configured to identify at least one of:
a service group associated with the terminal requesting registration;
an application group associated with the terminal requesting registration;
a service group associated with the **PDU** session requesting activation; or
an application group associated with the **PDU** session requesting activation.

In embodiments of the present disclosure, some or all of the steps and their optional implementations may be combined with any of the steps in other embodiments, or with any of the optional implementations in other embodiments.

FIG. 4a is a schematic flowchart of an information processing method according to an embodiment of the present disclosure. As shown in FIG. 4a, an embodiment of the present disclosure relates to an information processing method, performed by a second network element. The method includes the following steps.

At step S4101, first information is obtained.

In some embodiments, for optional implementations of step S4101, reference may be made to optional implementations of step S2104 in FIG. 2a, as well as other related parts in the embodiments involved in FIG. 2a, which will not be repeated here.

In some embodiments, the second network element receives the first information sent by the first network element, but is not limited to this, and may also receive the first information sent by other entities.

In some embodiments, the second network element obtains the first information specified by the protocol.

In some embodiments, the second network element obtains the first information from the upper layer(s).

In some embodiments, the second network element processes to obtain the first information.

In some embodiments, step S4101 is omitted, and the second network element autonomously implements the function indicated by the first information, or the above function is default or defaulted.

At step S4102, network slice admission control is performed on the terminal.

In some embodiments, for optional implementations of step S4102, reference may be made to optional implementations of step S2105 in FIG. 2a, as well as other related parts in the embodiments involved in FIG. 2a, which will not be repeated here.

At step S4103, seventh information is sent.

In some embodiments, for optional implementations of step S4103, reference may be made to optional implementations of step S2106 in FIG. 2a, as well as other related parts in the embodiments involved in FIG. 2a, which will not be repeated here.

In some embodiments, the second network element sends the seventh information to the first network element, but is not limited to this, and may also send the seventh information to other entities.

Optionally, the seventh information may be configured to indicate whether to allow the terminal to be registered in the network slice.

The information processing method disclosed in embodiments of the present disclosure may include at least one of steps S4101 to S4103. For example, steps S4101 can be implemented as an independent embodiment, and step S4102 can be implemented as an independent embodiment. For example, steps S4101 to S4103 can be implemented as an independent embodiment, and steps S4102 to S4103 can be implemented as an independent embodiment, but is limited to these.

In some embodiments, step S4101 is optional, and one or more of these steps may be omitted or replaced in different embodiments.

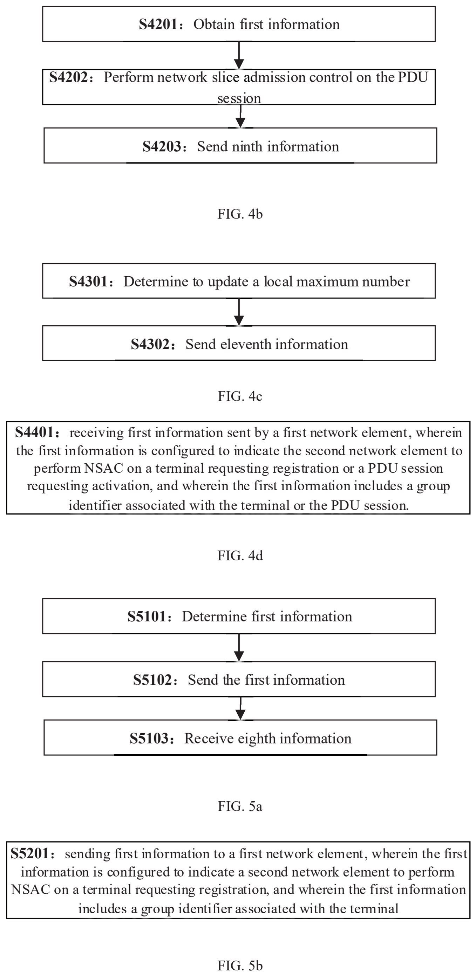

FIG. 4b is a schematic flowchart of an information processing method according to an embodiment of the present disclosure. As shown in FIG. 4b, an embodiment of the present disclosure relates to an information processing method, performed by a second network element. The method includes the following steps.

At step S4201, first information is obtained.

In some embodiments, for optional implementations of step S4201, reference may be made to optional implementations of step S2204 in FIG. 2b, as well as other related parts in the embodiments involved in FIG. 2b, which will not be repeated here.

In some embodiments, the second network element receives the first information sent by the first network element, but is not limited to this, and may also receive the first information sent by other entities.

In some embodiments, the second network element obtains the first information specified by the protocol.

In some embodiments, the second network element obtains the first information from the upper layer(s).

In some embodiments, the second network element processes to obtain the first information.

In some embodiments, step S4101 is omitted, and the second network element autonomously implements the function indicated by the first information, or the above function is default or defaulted.

At step S4202, network slice admission control is performed on the PDU session.

In some embodiments, for optional implementations of step S4202, reference may be made to optional implementations of step S2205 in FIG. 2b, as well as other related parts in the embodiments involved in FIG. 2b, which will not be repeated here.

At step S4203, ninth information is sent.

In some embodiments, for optional implementations of step S4203, reference may be made to optional implementations of step S2206 in FIG. 2b, as well as other related parts in the embodiments involved in FIG. 2b, which will not be repeated here.

In some embodiments, the second network element sends the ninth information to the first network element, but is not limited to this, and may also send the ninth information to other entities.

Optionally, the ninth information may be configured to indicate whether to allow the PDU session to be activated in the network slice.

The information processing method disclosed in embodiments of the present disclosure may include at least one of steps S4201 to S4203. For example, step S4201 can be implemented as an independent embodiment, and step S4202 can be implemented as an independent embodiment. For example, steps S4201 to S4203 can be implemented as an independent embodiment, and steps S4202 to S4203 can be implemented as an independent embodiment, but is limited to these.

In some embodiments, step S4201 is optional, and one or more of these steps may be omitted or replaced in different embodiments.

In embodiments of the present disclosure, some or all of the steps and their optional implementations may be combined with any of the steps in other embodiments, or with any of the optional implementations in other embodiments.

FIG. 4c is a schematic flowchart of an information processing method according to an embodiment of the present disclosure. As shown in FIG. 4c, an embodiment of the present disclosure relates to an information processing method, performed by a second network element. The method includes the following steps.

At step S4301, it is determined to update a local maximum number.

In some embodiments, for optional implementations of step S4301, reference may be made to optional implementations of step S2301 in FIG. 2c, as well as other related parts in the embodiments involved in FIG. 2c, which will not be repeated here.

At step S4302, eleventh information is sent.

In some embodiments, for optional implementations of step S4302, reference may be made to optional implementations of step S2302 in FIG. 2c, as well as other related parts in the embodiments involved in FIG. 2c, which will not be repeated here.

In some embodiments, the second network element sends the eleventh information to the first network element, but is not limited to this, and may also send the twelfth information to other entities.

In some embodiments, the eleventh information may be used by the first network element to update the local maximum number.

The information processing method disclosed in embodiments of the present disclosure may include at least one of steps S4301 to S4302. For example, steps S4301 to S4302 can be implemented as an independent embodiment, but is limited to these.

In embodiments of the present disclosure, some or all of the steps and their optional implementations may be combined with any of the steps in other embodiments, or with any of the optional implementations in other embodiments.

FIG. 4d is a schematic flowchart of an information processing method according to an embodiment of the present disclosure. As shown in FIG. 4d, an embodiment of the present disclosure relates to an information processing method, performed by a second network element. The method includes the following steps.

At step S4401, first information sent by a first network element is received, wherein the first information is configured to indicate the second network element to perform NSAC on a terminal requesting registration or a PDU session requesting activation, and wherein the first information comprises a group identifier associated with the terminal or the PDU session.

In some embodiments, in step S4401, receiving the first information sent by the first network element includes at least one of:
step S4401a, receiving a second request including the first information sent by the first network element, wherein the second request is sent based on a first request including the first information from a third network element, and the first request is configured to update a number of registered terminals; or
step S4401b, receiving a fourth request including the first information sent by the first network element, wherein the fourth request is sent based on a third request including the first information from a fourth network element, and the third request is configured to update a number of activated PDU sessions.

In some embodiments, for optional implementations of step S4401a, reference may be made to optional implementations of step S2104 in FIG. 2a, as well as other related parts in the embodiments involved in FIG. 2a, which will not be repeated here.

In some embodiments, for optional implementations of step S4401b, reference may be made to optional implementations of step S2204 in FIG. 2b, as well as other related parts in the embodiments involved in FIG. 2b, which will not be repeated here.

In some embodiments, the method further includes at least one of:
step S4402, sending a first response corresponding to the second request to the first network element according to a global maximum number of registered terminals and the first information; or
step S4403, sending a second response corresponding to the fourth request to the first network element according to a global maximum number of PDU sessions and the first information.

In some embodiments, for optional implementations of step S4402, reference may be made to optional implementations of step S2106 in FIG. 2a, as well as other related parts in the embodiments involved in FIG. 2a, which will not be repeated here.

In some embodiments, for optional implementations of step S4403, reference may be made to optional implementations of step S2206 in FIG. 2b, as well as other related parts in the embodiments involved in FIG. 2b, which will not be repeated here.

In some embodiments, the first response includes second information, and the second information is configured to update a maximum number of terminals registered with a network slice of the first network element; and/or the second response includes third information, and the third information is configured to update a maximum number of PDU sessions in a network slice of the first network element.

In some embodiments, the method further includes:
step S4404, determining a reserved quantity in the global maximum number of registered terminals or the global maximum number of PDU sessions, wherein the reserved quantity is one of:
a terminal quota of a reserved NSAC associated with the group identifier;
a PDU session quota of a reserved NSAC associated with the group identifier; or
a group quota of a reserved NSAC, wherein the group quota is associated with a terminal group or a PDU session identified by the group identifier.

In some embodiments, for optional implementations of step S4404, reference may be made to optional implementations of step S2105 in FIG. 2a and optional implementations of step S2205 in FIG. 2b, as well as other related parts in the embodiments involved in FIG. 2a and FIG. 2b, which will not be repeated here.

In some embodiments, the method further includes:
step S4405, receiving fourth information sent by the first network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

In some embodiments, for optional implementations of step S4405, reference may be made to optional implementations of step S2301 in FIG. 2c, as well as other related parts in the embodiments involved in FIG. 2c, which will not be repeated here.

In some embodiments, the method further includes:
sending a subscription request to the first network element, wherein the subscription request is configured to subscribe the remaining quota or the used quota in the NSAC quota from the first network element.

In some embodiments, the method further includes:
updating the NSAC quota according to the remaining quota or the used quota in the NSAC quota.

In some embodiments, the group identifier is determined by the first network element based on local configuration information and/or operations, administration and maintenance (OAM) configuration information of the first network element; or the group identifier is received by the first network element from a fifth network element.

In some embodiments, the group identifier is configured to identify at least one of:
a service group associated with the terminal requesting registration;
an application group associated with the terminal requesting registration;
a service group associated with the PDU session requesting activation; or
an application group associated with the PDU session requesting activation.

The information processing method disclosed in embodiments of the present disclosure may include at least one of steps S4401 to S4405. For example, steps S4401 to S4403 can be implemented as an independent embodiment, but is limited to these.

In embodiments of the present disclosure, some or all of the steps and their optional implementations may be combined with any of the steps in other embodiments, or with any of the optional implementations in other embodiments.

FIG. 5a is a schematic flowchart of an information processing method according to an embodiment of the present disclosure. As shown in FIG. 5a, an embodiment of the present disclosure relates to an information processing method, performed by a third network element. The method includes the following steps.

At step S5101, first information is determined.

In some embodiments, for optional implementations of step S5101, reference may be made to optional implementations of step S2101 in FIG. 2a, as well as other related parts in the embodiments involved in FIG. 2a, which will not be repeated here.

At step S5102, the first information is sent.

In some embodiments, for optional implementations of step S5102, reference may be made to optional implementations of step S2102 in FIG. 2a, as well as other related parts in the embodiments involved in FIG. 2a, which will not be repeated here.

In some embodiments, the third network element sends the first information to the first network element, but is not limited to this, and may also send the first information to other entities.

At step S5103, eighth information is received.

In some embodiments, for optional implementations of step S5103, reference may be made to optional implementations of step S2102 in FIG. 2a, as well as other related parts in the embodiments involved in FIG. 2a, which will not be repeated here.

In some embodiments, the third network element receives the eighth information sent by the first network element, but is not limited to this, and may also receive the first information sent by other entities.

The information processing method disclosed in embodiments of the present disclosure may include at least one of steps S5101 to S5103. For example, steps S5101 to S5103 can be implemented as an independent embodiment, but is limited to these.

FIG. 5b is a schematic flowchart of an information processing method according to an embodiment of the present disclosure. As shown in FIG. 5b, an embodiment of the present disclosure relates to an information processing method, performed by a third network element. The method includes the following steps.

At step S5201, first information is sent to a first network element, wherein the first information indicates a second network element to perform NSAC on a terminal requesting registration, and wherein the first information includes a group identifier associated with the terminal.

In some embodiments, for optional implementations of step S5201, reference may be made to optional implementations of step S2102 in FIG. 2a and optional implementations of step S5102 in FIG. 5a, as well as other related parts in the embodiments involved in FIG. 2a and FIG. 5a, which will not be repeated here.

In some embodiments, in step S5201, sending the first information to the first network element includes:
sending a first request including the first information to the first network element, wherein the first request is configured to update a number of registered terminals.

In some embodiments, the group identifier is determined by the third network element based on at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
group information in a context of the terminal.

In some embodiments, for optional implementations of step S5202, reference may be made to optional implementations of step S2101 in FIG. 2a and optional implementations of step S5101 in FIG. 5a, as well as other related parts in the embodiments involved in FIG. 2a and FIG. 5a, which will not be repeated here.

In some embodiments, the group identifier is configured to identify at least one of:
a service group associated with the terminal requesting registration; or
an application group associated with the terminal requesting registration.

The information processing method disclosed in embodiments of the present disclosure may include at least one of steps S5201 to S5202. For example, steps S5201 to S5202 can be implemented as an independent embodiment, but is limited to these.

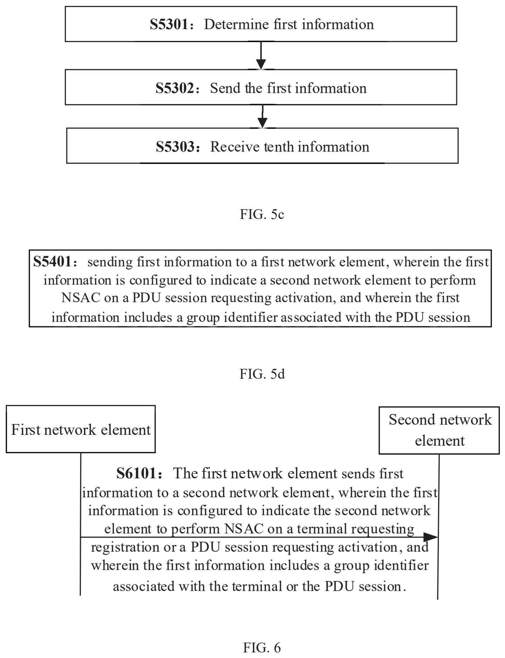

FIG. 5c is a schematic flowchart of an information processing method according to an embodiment of the present disclosure. As shown in FIG. 5c, an embodiment of the present disclosure relates to an information processing method, performed by a fourth network element. The method includes the following steps.

At step S5301, first information is determined.

In some embodiments, for optional implementations of step S5301, reference may be made to optional implementations of step S2201 in FIG. 2b, as well as other related parts in the embodiments involved in FIG. 2b, which will not be repeated here.

At step S5302, the first information is sent.

In some embodiments, for optional implementations of step S5302, reference may be made to optional implementations of step S2202 in FIG. 2b, as well as other related parts in the embodiments involved in FIG. 2b, which will not be repeated here.

In some embodiments, the fourth network element sends the first information to the first network element, but is not limited to this, and may also send the first information to other entities.

At step S5303, tenth information is received.

In some embodiments, for optional implementations of step S5302, reference may be made to optional implementations of step S2202 in FIG. 2b, as well as other related parts in the embodiments involved in FIG. 2b, which will not be repeated here.

In some embodiments, the fourth network element receives the tenth information sent by the first network element, but is not limited to this, and may also receive the tenth information sent by other entities.

The information processing method disclosed in embodiments of the present disclosure may include at least one of steps S5301 to S5302. For example, steps S5301 to S5303 can be implemented as an independent embodiment, but is limited to these.

In embodiments of the present disclosure, some or all of the steps and their optional implementations may be combined with any of the steps in other embodiments, or with any of the optional implementations in other embodiments.

FIG. 5d is a schematic flowchart of an information processing method according to an embodiment of the present disclosure. As shown in FIG. 5d, an embodiment of the present disclosure relates to an information processing method, performed by a fourth network element. The method includes the following steps.

At step S5401, first information is sent to a first network element, wherein the first information is configured to indicate a second network element to perform NSAC on a PDU session requesting activation, and wherein the first information includes a group identifier associated with the PDU session.

In some embodiments, for optional implementations of step S5401, reference may be made to optional implementations of step S2202 in FIG. 2b and optional implementations of step S5302 in FIG. 5c, as well as other related parts in the embodiments involved in FIG. 2b and FIG. 5c, which will not be repeated here.

In some embodiments, in step S5401, sending the first information to the first network element includes:
sending a third request including the first information to the first network element, wherein the third request is configured to update a number of activated PDU sessions.

In some embodiments, the group identifier is determined by the fourth network element based on at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
indication information of XR applications or XR service capabilities of the terminal.

In some embodiments, for optional implementations of step S5402, reference may be made to optional implementations of step S2201 in FIG. 2b and optional implementations of step S5301 in FIG. 5c, as well as other related parts in the embodiments involved in FIG. 2b and FIG. 5c, which will not be repeated here.

In some embodiments, the group identifier is configured to identify at least one of:
a service group associated with the PDU session requesting activation; or
an application group associated with the PDU session requesting activation.

The information processing method disclosed in embodiments of the present disclosure may include at least one of steps S5401 to S5402. For example, steps S5401 to S5402 can be implemented as an independent embodiment, but is limited to these.

In embodiments of the present disclosure, some or all of the steps and their optional implementations may be combined with any of the steps in other embodiments, or with any of the optional implementations in other embodiments.

FIG. 6 is a schematic diagram illustrating interaction in an information processing method according to an embodiment of the present disclosure. As shown in FIG. 6a, an embodiment of the present disclosure relates to an information processing method, applied in the communication system. The method includes the following steps.

At step S6101, a first network element sends first information to a second network element, wherein the first information is configured to indicate the second network element to perform NSAC on a terminal requesting registration or a PDU session requesting activation, and wherein the first information includes a group identifier associated with the terminal or the PDU session.

In some embodiments, for optional implementations of step S6101, reference may be made to optional implementations of step S2104 in FIG. 2a, step S2204 in FIG. 2b, step S3103 in FIG. 3a, step S3203 in FIG. 3b, step S3401 in FIG. 3d, step S4201 in FIG. 4b and step S4401 in FIG. 4d, as well as other related parts in the embodiments involved in FIG. 2a, FIG. 2b, FIG. 3a, FIG.3b, FIG. 3d, FIG. 4b and FIG. 4d, which will not be repeated here.

In some embodiments, the above method may include the methods of the first network element, the second network element, the third network element, and the fourth network element, which will not be repeated here.

In embodiment, some or all of the steps and their optional implementations may be combined with any of the steps in other embodiments, or with any of the optional implementations in other embodiments.

Embodiments of the present disclosure provide an information processing method. The method enables the NSAC of Group UE or Group PDU session in a hierarchical NSACF architecture to be uniformly executed by the primary NSACF. NSACF (i.e. local NSACF) sends a group ID (e.g. XR service ID or common ID) to the primary NSACF, which executes the global NSAC of the Group UE or Group PDU session.

In an embodiment, Local NSACF: The Local NSACF interacts with the primary NSACF to handle the NSAC request when the Group ID is provided with the NSAC request from AMF/SMF together.

In some examples, the Local NSACF interacts with the primary NSACF to handle the NSAC request when the Group ID is provided, whether the local maximum number of PDU sessions is reached or not, or whether the local maximum number of registered UEs is reached.

In some examples, the Local NSACF interacts with the primary NSACF to handle the NSAC request when the Group ID is provided, and "the local maximum Group number of PDU sessions is reached, or the local maximum group number of registered UEs is reached".

In some examples, the local maximum number of PDU sessions and/or the local maximum Group number of PDU sessions is provided by Primary NSACF.

In an embodiment, Primary NSACF: The Primary NSACF checks the global maximum UE/PDU session number and determines whether to accept or reject the NSAC request from Local NSACF considering the Group ID contained in the NSAC request. Further, the response result of the NSAC request may include indication information for updating the local maximum number of registered terminals or the local maximum number of PDU sessions.

In some examples, to support the Group NSAC (Group UE of XR service, or Group PDU sessions of XR service from one or multi-UEs), the Primary NSACF always reserves part of the global maximum number for the group use (e.g. quota of group).

In some examples, the quota of Group NSAC can be used only by Primary NSACF, or can be distributed to the NSACFs for the delegation. When the quota of Group NSAC is distributed to the NSACF, the Primary NSACF can subscribe the remaining quota or used quota from the NSACFs, can be notified the remaining quota report from the NSACFs, can update the group quota based on the remaining quota report.

In an embodiment, the AMF sends the group ID to the Local NSACF. For the scenario, NSACF monitors and controls the number of registered UEs per network slice for the network slices that are subject to NSAC.

In some examples, AMF sends a terminal number update request message to NSACF, which includes the terminal identifier, authorized NSSAI access type, relevant slice S-NSSAI(s) requesting execution of NSAC, AMF identifier, and update flag.

AMF also includes a group identifier in the request message to NSACF, which is used to identify the XR service group or application group to which the UE belongs (or is associated).

In some examples, the group identifier may be an internal group identifier or a standardized common group identifier.

Furthermore, AMF determines the group identifier. For example, AMF can determine the group identifier based on local configuration, OAM configuration, UDM subscription information, XR multimodal service capabilities and/or group information related to UE PEI sent by UE, or other group information in the context of UE sent by AMF.

In an embodiment, SMF sends the group identifier to the local NSACF. In this scenario, NSACF monitors network slices managed by NSAC and controls the number of PDU sessions per network slice.

In some examples, SMF sends a PDU session number update request message to NSACF, which includes the terminal identifier, session ID, slice identifier or identifier list S-NSSAI(s) that needs to execute NSAC, access type, and update flag.

SMF also includes the group identifier in the request message to NSACF, which is used to identify the XR service group or application group to which the PDU session belongs (or is associated).

In some examples, the group identifier may be an internal group identifier, a standardized common group identifier, or an XR application ID or XR service capability indication.

In some examples, SMF determines the group identifier (e.g. XR service ID or common ID). SMF can determine the XR service ID, group identifier, or common ID based on at least one of local configuration, OAM configuration, UDM subscription information, XR multimodal service capability/UE PEI related group information sent by UE, and UE XR application or XR service capability indication information sent by RAN/AMF.

In some embodiments, an information processing method is provided. This method involves the validity check and update process of the number of registered users in the slice under the hierarchical NSACF architecture.

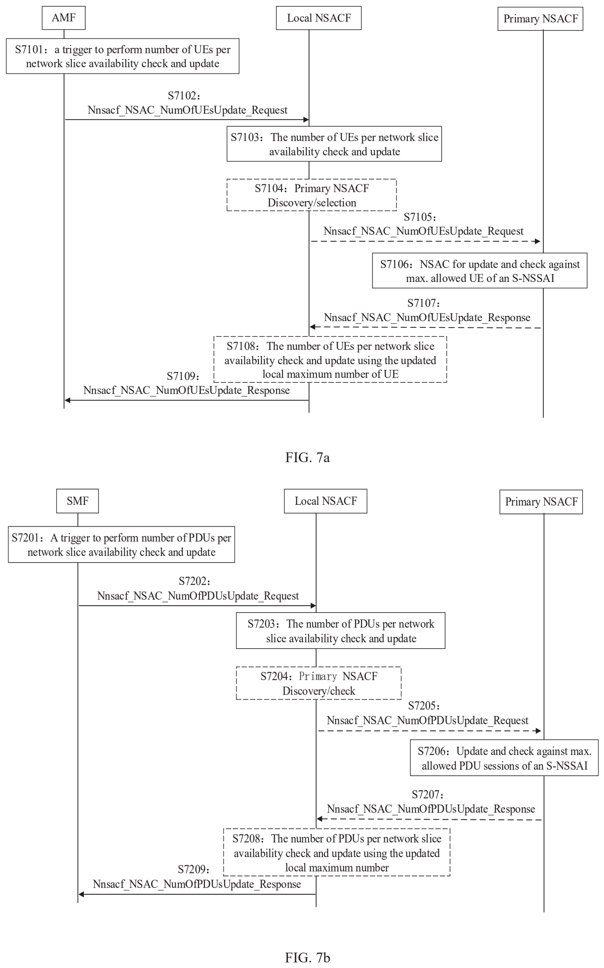

As shown in FIG. 7a, for an S-NSSAIs subject to counting of the number of registered UEs, if hierarchical NSACF architecture is deployed in the network, the enforcement of maximum number of UEs registered for an S-NSSAI is performed as follows.

In the registration process of the terminal, including initial registration and registration of mobile registration update types caused by cross AMF switching, NSAC is executed before or after the registration acceptance message based on whether the early availability check (EAC) mode is enabled (for example, when EAC is activated, NSAC process is executed before the registration acceptance message; when EAC is not activated, the NSAC process is executed after the registration acceptance message.)

At step S7101, if the AMF is not aware of which NSACF to communicate, the AMF performs NSACF discovery and selection.

The AMF triggers the Number of UEs per network slice availability check and update procedure to update the number of UEs registered with a network slice when a network slice subject to NSAC is included in the Allowed NSSAI (i.e. the AMF requests to register the UE with the S-NSSAI) or removed from the Allowed NSSAI (i.e. the AMF requests to de-register the UE from the S-NSSAI) for a UE. The trigger event at the AMF also includes the change of Allowed NSSAI in case of inter-AMF mobility. The procedure is triggered in the following cases:
- In the registration process of the terminal, and registration of mobile registration update types caused by cross AMF switching, the NSAC is executed either before or after the registration acceptance message, depending on whether the Early Availability Check (EAC) mode is enabled (e.g., when EAC is active, the NSAC process is performed before the registration acceptance message; when EAC is inactive, the NSAC process is performed after the registration acceptance message).
- In the deregistration process, after the deregistration procedure is completed, the NSAC process is executed to remove the UE from the counting.
- In the configuration update process of the terminal, such as the NSSAA slice specific authentication and authorization process or the S-NSSAI change subscription process triggering configuration updates, the NSAC is executed before or after the configuration update message based on the EAC mode (e.g., if the EAC mode is activated and the update flag indicates an increase in quantity, the NSAC is executed before the UE configuration update message; if the EAC mode is activated but the update flag indicates a decrease in quantity or if the EAC mode is not activated, the NSAC is executed after the UE configuration update message).

At step S7102, AMF sends the Nnsacf_NSAC_NumOfUEsUpdate_Request message to the NSACF.

In some examples, the AMF includes the terminal identifier (UE ID), access type of the authorized NSSAI, S-NSSAIs of related slices requesting NSAC, AMF identifier, and update flag in the message. The update flag indicates whether the number of registered UEs has increased or decreased. For example, when a user registers to the slice, it triggers an increase, and when a UE deregisters from the slice or registration fails, it triggers a decrease. If the UE is already registered, the AMF will also send a UE registration indication.

In some examples, if a UE belongs to an XR service group or application group, the AMF includes a group identifier in the request message to the NSACF. This group identifier is used to identify the XR service group or application group to which the UE belongs. The group identifier may be an internal group identifier or a standardized common group identifier.

In some examples, the AMF determines whether the UE belongs to an XR group and the group ID. The AMF can determine the corresponding group identifier based on local configuration, OAM configuration, UDM subscription information, XR multimodal service capabilities/UE PEI related group information sent by the UE, XR multimodal service capabilities sent by the RAN, or group information from other AMFs in the UE context.

In some examples, if this is the first interaction between the AMF and the NSACF for the network slice, the NSAC process is executed. The AMF carries the relevant NF endpoint information that the EAC needs to notify in the message, thereby implicitly subscribing to EAC-related notifications for the slice from the NSACF.

At step S7103, Local NSACF executes NSAC for the indicated network slice (S-NSSAI).

When AMF provides the NSAC request that includes the group identifier, the local NSACF interacts with the primary NSACF to process the NSAC request.

When the group identifier is provided, regardless of whether the local maximum number of registered terminals is reached, the local NSACF interacts with the primary NSACF to process the NSAC request.

Alternatively, when the group identifier is provided and the local maximum group number of registered terminals is reached, the local NSACF interacts with the primary NSACF to process the NSAC request. In this scenario, the local maximum group number is provided by the primary NSACF.

If the number of terminal groups does not reach the local maximum group number, the local NSACF executes the NSAC of the terminal, ignoring steps S7104 to S7108.

At step S7104, if the Primary NSACF has not been discovered before, the local NSACF discovers and selects the Primary NSACF.

At step S7105, The local NSACF sends the Nnscf_NSAC_NumOfUEsUpdate_Request message to the Primary NSACF.

The request includes the NSAC request information received from AMF, which may include the XRM Group ID of the UE.

At step S7106, the Primary NSACF performs NSAC updates and checks on the maximum allowed number of UEs for S-NSSAI.

The primary NSACF checks the global maximum UE number and determines whether to accept or reject the request to update local maximum UE number from NSACF considering the Group ID.

In some examples, to support the Group NSAC (Group UE of XR service, or Group PDU sessions of XR service from one or multi-UEs), the Primary NSACF always reserves part of the global maximum number for the group use (e.g. quota of group).

In some examples, the quota of Group NSAC can be used only by Primary NSACF, or can be distributed to the NSACFs for the delegation. When the quota of Group NSAC is distributed to the NSACF, the Primary NSACF can subscribe the remaining quota or used quota from the NSACFs, can be notified the remaining quota report from the NSACFs, can update the group quota based on the remaining quota report.

At step S7107, the Primary NSACF returns the Nnscf_NSAC_NumOfUEsUpdate_Response message to the NSACF. The response may include the indication (e.g., rejection).

If the Primary NSACF determines to adjust the configured value (quota, threshold, and the link) stored at the NSACF, the updated information is also included in the response respectively.

At step S7108, the NSACF checks the response from Primary NSACF.

If the response includes the updated configured value, NSACF updates local data based on the received update information and performs NSAC on the indicated S-NSSAI based on the updated local data.

If the response message does not contain update information, a message is returned to AMF based on the response of the primary NSACF.

At step S7109, NSACF returns a response message of Nnsacf_NSAC_NumOfUEsUpdate_Response to AMF.

The message includes a slice identifier S-NSSAI(s) and a result indication, which indicates whether the slice has reached the maximum number of registered users (e.g. the maximum number of registered terminals in the previous embodiments).

Optionally, the result indication includes an indication of whether the slice has reached the maximum registered group value (e.g., the maximum group number of registered terminals in the aforementioned embodiments).

In the UE registration process, if only some slices reach the maximum number of registered users, AMF will send a registration acceptance message to the UE requesting registration. In the message, the slice identifier rejected due to NSAC is included in the rejected slice list, and the corresponding rejection reason is set as the maximum number of users in the slice area has been reached. An optional timer can be set to reinitiate a request.

When the AMF sends a request message to NSACF, and all requested slices S-NSSAI(s) have reached the maximum allowed value, and if one or more signed slices are marked as default slices in the signing information and NSAC does not need to be executed at the same time, the AMF may decide to place these default slices in the allowed NSSAI as authorized allowed slices. Otherwise, AMF will reject the registration request of the UE. In the registration rejection message, AMF carries a list of rejection slice identifiers, with each slice carrying a corresponding rejection reason value, such as reaching the maximum allowed number of registered users in the slice area. Optionally, a timer that can reinitiate a request can be set.

Optionally, if the group threshold or quota has been reached, the rejection reason indicates that the maximum group threshold or quota has been reached.

The information processing method disclosed in embodiments of the present disclosure may include at least one of steps S7101 to S7102. For example, steps S7101 to S7103 combined with step S7109 can be implemented as an independent embodiment, and for example, steps S7105 to S7107 can be implemented as an independent embodiment, but is limited to these.

In embodiments of the present disclosure, some or all of the steps and their optional implementations may be combined with any of the steps in other embodiments, or with any of the optional implementations in other embodiments.

In some embodiments, an information processing method is provided. This method involves the availability check and update procedure of the number of sessions created by the slice under the hierarchical NSACF architecture. The availability check and update process for the number of sessions created by the slice is used to update (i.e. increase or decrease) the number of PDU sessions established in the corresponding area on the slice. This process is applicable to the hierarchical NSAC architecture. NSACF has two roles that require interaction between them.
- Primary NSACF, controls and distributes of the maximum number of PDU Sessions for other NSACF(s) deployed in different NSAC service Area. The Primary NSACF handles overall NSAC for an S-NSSAI at the global level (i.e. it is ultimately responsible for the NSAC for an S-NSSAI).
- NSACF (i.e. local NSACF) is responsible for one or multiple NSAC service Area. And one NSAC service area is only associated with one NSACF instance or one NSACF Set.

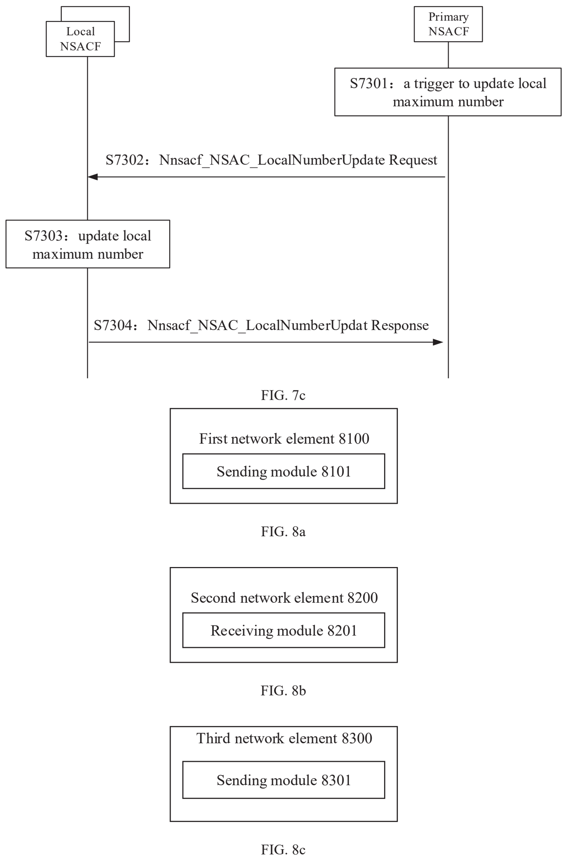

As shown in FIG. 7c, for an S-NSSAI subject to counting of the number of PDU sessions, if hierarchical NSACF architecture is deployed in the network, the enforcement of maximum number of PDU Session established for an S-NSSAI is performed as follow.

At step S7201, if SMF does not know the counterpart NSACF, then SMF first performs NSACF discovery and selection.

SMF (SMF anchoring the PDU Session) triggers the availability check and update procedure for the number of slice sessions. The triggering condition for this procedure can be at the beginning of creating a new PDU session, or after a PDU session is successfully released, and SMF triggers the process for slices that require NSAC execution.

At step S7202, SMF (SMF anchoring the PDU session) sends the request message of nsacf_nsac_numofpdusupdate_request to NSACF.

The request message includes the terminal identifier (UE ID), session ID, slice identifier or identifier list S-NSSAI (s) that requires NSAC execution, access type, and update flag.

The update flag is used to indicate whether the number of sessions is increasing, decreasing, or updating. For example, it increases during the session establishment process or when a new access is made to an existing multi access session, decreases after the session release process or when a certain access is released from an existing multi access session, and updates when indicating an update to the access type of an existing PDU session.

In some examples, SMF also includes a group identifier in the request message to NSACF, which is used to identify the XR service group or application group to which the PDU session belongs. For example, the group identifier may be an internal group identifier, a standardized common group identifier, or an XR application ID or an indication of XR service capabilities.

Furthermore, SMF determines the group identifier. SMF can determine the group identifier based on at least one of local configuration, OAM configuration, UDM subscription information, XR multimodal service capability/UE PEI related group information sent by UE, UE XR application sent by RAN/AMF and indication information of XR service capability.

At step S7203, the local NSACF performs NSAC for the indicated S-NSSAI considering the XR group ID/ XR service ID.

The Local NSACF interacts with the primary NSACF to handle the NSAC request when the Group ID is provided with the NSAC request from SMF together.

Further, the Local NSACF interacts with the primary NSACF to handle the NSAC request when the Group ID is provided, whether the local maximum number of PDU sessions is reached or not.

Alternatively, the Local NSACF interacts with the primary NSACF to handle the NSAC request when the Group ID is provided, and the local maximum Group number of PDU sessions is reached. For the scenario, the local maximum Group number is provided by Primary NSACF.

If the group number of PDU sessions does not reach the local maximum group number, the local NSACF executes NSAC on the terminal, ignoring steps S7204 to S7208.

At step S7204, if the Primary NSACF has not been discovered before, the local NSACF discovers and selects the Primary NSACF, which manages the global service area.

At step S7205, the local NSACF invokes Nnsacf_NSAC_NumOfPDUsUpdate request to the Primary NSACF.

The request message includes the S-NSSAI, the Group ID.

At step S7206, the primary NSACF performs NSAC updates and checks on the maximum allowed number of PDU sessions for S-NSSAI.

The Primary NSACF checks the global maximum PDU session number and determines whether to accept or reject the request to update local maximum PDU session number from NSACF considering the Group ID.

In some examples, to support the NSAC quota (for example, Group UE of XR service, or Group PDU sessions of XR service from one or multi-UEs), the Primary NSACF always reserves part of the global maximum number for the group use (e.g. quota of group).

In some examples, the quota of Group NSAC can be used only by Primary NSACF, or can be distributed to the NSACFs for the delegation. When the quota of Group NSAC is distributed to the NSACF, the Primary NSACF can subscribe the remaining quota from the NSACFs, can be notified the remaining quota report from the NSACFs, can update the group quota based on the remaining quota report.

At step S7207, the Primary NSACF returns the Nnscf_NSAC_NumOfUEsUpdate response message to the NSACF.

The response includes a new allocated local maximum PDU sessions number and/or a new allocated local maximum Group PDU sessions number, or an indication to reject the request to update local maximum PDU session number.

At step S7208, the NSACF checks the response from the primary NSACF.

If the primary NSACF provides an updated local maximum number, the NSACF replaces the local maximum PDU session number and/or the local maximum group PDU session number with the received value.

Step S7203 is executed based on the updated configured value. If there is no update information in the response message, a message is returned to SMF based on the response from NSACF.

Ate step S7209, the NSACF returns the response message of Nnsacf_NSAC_NumOfPDUsUpdate_Response to the SMF.

NSACF confirms the corresponding update by returning an Nnsacf_NSAC_NumOfPDUsUpdate-Response response message to SMF, which includes a result indication. If NSACF returns the number of sessions created for the slice, which has reached the maximum allowed value, SMF may reject the session establishment request, with the rejection reason set as 'the number of sessions allowed for the slice has been reached'. Moreover, optionally, a fallback timer and an access type can be set.

For multi access sessions, NSACF may receive multi access sessions, providing the result indication as reached or not reached, and corresponding access types. When SMF rejects a multi access session, it sets the access type in at least one of the following ways: if the UE has dual access, if the dual access indicated by NSACF fails, the access type indicates dual access; if one access failure is indicated, it indicates that the access has been received; if the UE has single access, it indicates that the access has been received.

If the UE receives a fallback timer, it will not request user plane resource creation under this restricted access type until the timer expires. UE may request PDU session creation for non restricted access types.

If the session creation ultimately fails in the subsequent process, SMF will trigger interaction with NSACF again, deduct the corresponding number of sessions, and update the response information.

The information processing method disclosed in embodiments of the present disclosure may include at least one of steps S7201 to S7209. For example, steps S7201 to S7203 combined with step S7209 can be implemented as an independent embodiment, and for example, steps S7205 to S7207 can be implemented as an independent embodiment, but is limited to these.

In embodiments of the present disclosure, some or all of the steps and their optional implementations may be combined with any of the steps in other embodiments, or with any of the optional implementations in other embodiments.

In some embodiments, an information processing method is provided. This method involves updating the local maximum group number under a hierarchical NSACF architecture. The primary NSACF can update the local maximum group number of terminals and/or PDU sessions configured at the NSACF at any time.

As shown in FIG. 7c, the method may include the following steps.

At step S7301, the primary NSACF decides to update the local maximum group number of UE or PDU sessions configured at the NSACF.

For example, the configured value at NSACF(s) can be based on the current registered UE/PDU session group number at NSACFs and based on operator policy.

At step S7302, the primary NSACF sends an Nnsacf_NSAC_LocalNumberUpdate request to the NSACF.

The message includes the new configured value of local group maximum number of UE or PDU sessions. The new configured value(s) of local group maximum number given by the Primary NSACF can be higher or lower than the existing local maximum number configured at the NSACF(s).

At step S7303, the NSACF replaces the local group maximum number with the received new local group maximum number value.

At step S7304, the NSACF returns the Nnsacf_NSAC_LocalNumberUpdate Response to the Primary NSACF.

The information processing method disclosed in embodiments of the present disclosure may include at least one of steps S7301 to S7304. For example, steps S7301 to S7304 can be implemented as independent embodiments, but are not limited to thereto.

In embodiments of the present disclosure, some or all of the steps and their optional implementations may be combined with any of the steps in other embodiments, or with any of the optional implementations in other embodiments.

Embodiments of the present disclosure also provide an apparatus for implementing any of the above information processing methods, for example, providing an apparatus comprising units or modules for implementing respective steps executed by the first network element, the second network element, the third network element, or the fourth network element in any of the above methods.

It should be understood that the division of units or modules in the above apparatuses is merely a division of logical functions. In actual implementations, the units may be fully or partially integrated into a single physical entity or may be physically separated. In addition, the units or modules in the apparatus may be implemented in the form of a processor invoking software. For example, the apparatus includes a processor, which is connected to a memory for storing instructions. The processor invokes the instructions stored in the memory to implement any one of the above methods or the functions of the units or modules in the apparatus. The processor may be a general-purpose processor, such as a central processing unit (CPU) or a microprocessor, and the memory may be internal or external to the apparatus. Or, the units or modules in the apparatus may be implemented in the form of a hardware circuit. Some or all of the functions of the units or modules may be realized via a design of the hardware circuit. The hardware circuit may be understood as one or more processors. For example, in an implementation, the hardware circuit is an application-specific integrated circuit (ASIC). Functions of some or all of the units are realized by designing logical relationships among components in the circuit. In another implementation, the hardware circuit may be implemented using a programmable logic device (PLD). Taking a field programmable gate array (FPGA) as an example, the FPGA may include a large number of logic gate circuits, and connection relationships among the logic gate circuits are configured by configuration files to realize the functions of some or all of the units or modules. All units or modules of the above apparatus may be fully implemented in the form of the processor invoking software, or fully implemented in the form of the hardware circuit, or partially implemented in the form of the processor invoking software and the remaining part implemented in the form of the hardware circuit.

In the embodiments of the present disclosure, the processor is a circuit with a signal processing capability. In an implementation, the processor may be a circuit capable of reading and executing instructions, such as a central processing unit (CPU), a microprocessor, a graphics processing unit (GPU) (which may be understood as a microprocessor), or a digital signal processor (DSP). In another implementation, the processor may realize certain functions via a logical relationship of the hardware circuit. The logical relationship of the hardware circuit may be fixed or reconfigured. For example, the processor may be a hardware circuit implemented as an ASIC or PLD, such as an FPGA. In a reconfigurable hardware circuit, a process in which the processor loads configuration files to configure the hardware circuit may be understood as a process that the processor loads instructions to realize the functions of some or all of the units or the modules. In addition, the hardware circuit may be designed specifically for artificial intelligence and may be understood as an ASIC, such as a neural network processing unit (NPU), a tensor processing unit (TPU), or a deep learning processing unit (DPU).

FIG. 8a is a block diagram of a first network element according to an embodiment of the present disclosure. As shown in FIG. 8a, the first network element 8100 includes a sending module 8101, configured to send first information to a second network element, wherein the first information is configured to indicate the second network element to perform NSAC on a terminal requesting registration or a PDU session requesting activation, and wherein the first information includes a group identifier associated with the terminal or the PDU session. Optionally, the sending module 8101 is configured to execute the steps related to information transmission performed by the first network element in any of the above information processing methods, which will not be repeated here. Optionally, the first network element 8100 further includes a receiving module, which is configured to perform the receiving related steps performed by the first network element in any of the above methods, and will not be repeated here.

FIG. 8b is a block diagram of a second network element according to an embodiment of the present disclosure. As shown in FIG. 8b, the second network element 8200 includes a receiving module 8201, configured to receive first information sent by a first network element, wherein the first information is configured to indicate the second network element to perform NSAC on a terminal requesting registration or a PDU session requesting activation, and wherein the first information includes a group identifier associated with the terminal or the PDU session. Optionally, the receiving module 8201 is configured to execute the steps related to information receiving performed by the second network element in any of the above information processing methods, which will not be repeated here. Optionally, the second network element 8200 further includes a sending module, which is configured to perform the sending related steps performed by the second network element in any of the above methods, and will not be repeated here.

FIG. 8c is a block diagram of a third network element according to an embodiment of the present disclosure. As shown in FIG. 8c, the third network element 8300 includes a sending module 8301, configured to send first information to a first network element, wherein the first information is configured to indicate a second network element to perform NSAC on a terminal requesting registration, and wherein the first information comprises a group identifier associated with the terminal. Optionally, the sending module 8301 is configured to execute the steps related to information transmission performed by the third network element in any of the above information processing methods, which will not be repeated here. Optionally, the third network element 8300 further includes a receiving module, which is configured to perform the receiving related steps performed by the third network element in any of the above methods, and will not be repeated here.

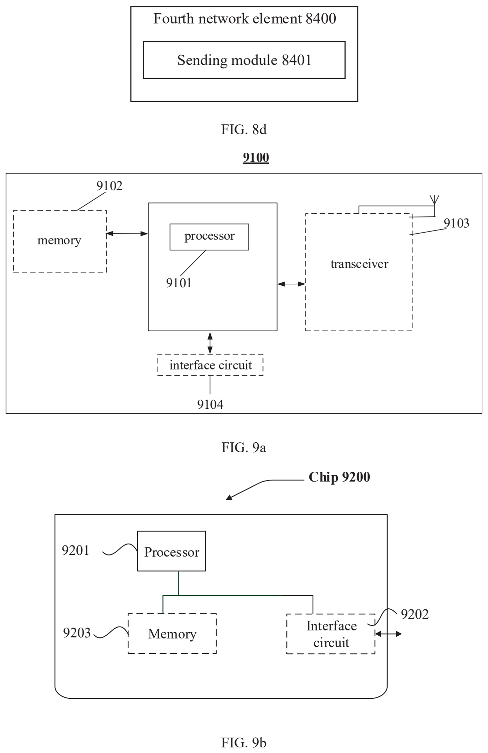

FIG. 8d is a block diagram of a fourth network element according to an embodiment of the present disclosure. As shown in FIG. 8d, the fourth network element 8400 includes a sending module 8401, configured to send first information to a first network element, wherein the first information is configured to indicate a second network element to perform NSAC on a PDU session requesting activation, and wherein the first information includes a group identifier associated with the PDU session. Optionally, the sending module 8401 is configured to execute the steps related to information transmission performed by the fourth network element in any of the above information processing methods, which will not be repeated here. Optionally, the fourth network element 8400 further includes a receiving module, which is configured to perform the receiving related steps performed by the fourth network element in any of the above methods, and will not be repeated here.

FIG. 9a is a block diagram of a communication device 9100 according to the embodiments of the present disclosure. The communication device 9100 may be a network device (for example, an access network device, a core network device, etc.), or may be a terminal (for example, a user equipment, etc.), or may be a chip, a chip system, or a processor supporting a network device to implement any one of the above methods, or may be a chip, a chip system, or a processor supporting a terminal to implement any one of the above methods. The communication device 9100 may be used to implement the method described in the above method embodiments. For details, reference may be made to the descriptions in the above method embodiments.

As shown in FIG. 9a, the communication device 9100 includes one or more processors 9101. The processor 9101 may be a general-purpose processor or a special-purpose processor. For example, it may be a baseband processor or a central processing unit. The baseband processor may be used to process communication protocols and communication data, and the central processing unit may be used to control communication devices (such as base stations, baseband chips, terminals, terminal chips, DU or CU, etc.) to execute computer programs and process computer program data. The processor 9101 is configured to call instructions to cause the communication device 9100 to execute any of the communication methods above.

In some embodiments, the communication device 9100 further includes one or more memories 9102 for storing instructions. Optionally, all or part of the memories 9102 may also be located outside the communication device 9100.

In some embodiments, the communication device 9100 further includes one or more transceivers 9103. When the communication device 9100 includes one or more transceivers 9103, the transceiver 9103 performs at least one of communication steps such as sending and/or receiving in the above methods, and the processor 9101 performs other steps.

In some embodiments, the transceiver may include a receiver and/or a transmitter, which may be separate or integrated together. Optionally, terms such as transceiver, transceiver unit, transceiver machine, transceiver circuit, etc. may be used interchangeably; terms such as transmitter, sending unit, transmitter machine, sending circuit, etc. may be used interchangeably; and terms such as receiver, receiving unit, receiver machine, receiving circuit, etc. may be used interchangeably.

In some embodiments, the communication device 9100 may include one or more interface circuits 9104. The interface circuit 9104 is connected to the memory 9102, and the interface circuit 9104 may be used to receive signals from the memory 9102 or other devices, and may be used to send the signals to the memory 9102 or other devices. For example, the interface circuit 9104 may read instructions stored in the memory 9102 and send the instructions to the processor 9101.

The communication device 9100 in the description of the above embodiments may be a network device or a terminal, but the scope of the communication device 9100 described in the present disclosure is not limited thereto, and the structure of the communication device 9100 may not be limited by FIG. 9a. The communication device may be a stand-alone device or may be part of a larger device. For example, the communication device may be: (1) a stand-alone IC, a chip, a chip system or a subsystem; (2) a collection of ICs including one or more ICs. In some examples, the collection of ICs may also include storage components for storing data and computer programs; (3) an ASIC, such as a modem; (4) a module that may be embedded within other devices; (5) a receiver, a terminal, a smart terminal, a cellular phone, a wireless device, a handheld machine, a mobile unit, an in-vehicle device, a network device, a cloud device, an artificial intelligence device, and the like; and (6) others.

FIG. 9b is a block diagram of a chip 9200 according to the embodiments of the present disclosure. For the case where the communication device 9100 may be a chip or a chip system, reference may be made to the block diagram of the chip 9200 shown in FIG. 9b, but it is not limited thereto.

The chip 9200 includes one or more processors 9201, and the processor 9201 is configured to call instructions to cause the chip 9200 to execute any one of the above communication methods.

In some embodiments, the chip 9200 further includes one or more interface circuits 9202. The interface circuit 9202 is connected to a memory 9203, the interface circuit 9202 may be used to receive signals from the memory 9203 or other devices, and the interface circuit 9202 may be used to send the signals to the memory 9203 or other devices. For example, the interface circuit 9202 may read instructions stored in the memory 9203 and send the instructions to the processor 9201. Optionally, terms such as interface circuit, interface, transceiver pin, and transceiver can be interchangeable with each other.

In some embodiments, the chip 9200 further includes one or more memories 9203 for storing instructions. Optionally, all or part of the memories 9203 may be located outside the chip 9200.

The present disclosure also provides a storage medium for storing instructions. When the instructions are running on the communication device 9100, the communication device 9100 is caused to implement any one of the above methods. Optionally, the storage medium is an electronic storage medium. Optionally, the electronic storage medium is a computer-readable storage medium, but is not limited thereto, and it may also be a storage medium readable by other devices. Optionally, the storage medium may be a non-transitory storage medium, but is not limited thereto, and it may also be a transitory storage medium.

The present disclosure also provides a program product. When the program product is executed by the communication device 9100, the communication device 9100 is caused to implement any one of the above communication methods. Optionally, the program product is a computer program product.

The present disclosure also provides a computer program. When the computer program is executed on a computer, the computer is caused to implement any one of the above communication methods.

After considering the specification and practicing the invention disclosed herein, those skilled in the art will easily come up with other embodiments of the invention. This disclosure is intended to cover any variations, uses, or adaptations of the present invention that follow the general principles of the present invention and include common knowledge or customary technical means in the art that are not disclosed in this disclosure. The specification and embodiments are only considered exemplary, and the true scope and spirit of the invention are indicated by the following claims.

It should be understood that the present invention is not limited to the precise structure described above and shown in the accompanying drawings, and various modifications and changes can be made without departing from its scope. The scope of the present invention is limited only by the appended claims.

## Claims

1. An information processing method, performed by a first network element, comprising:
sending first information to a second network element, wherein the first information is configured to indicate the second network element to perform network slice admission control (NSAC) on a terminal requesting registration or a packet data unit (PDU) session requesting activation, and wherein the first information comprises a group identifier associated with the terminal or the PDU session.

2. The method of claim 1, wherein sending the first information to the second network element comprises:
receiving a first request sent by a third network element, wherein the first request is configured to update a number of registered terminals, and the first request comprises the first information; and
sending a second request to the second network element, wherein the second request comprises the first information.

3. The method of claim 1, wherein sending the first information to the second network element comprises:
receiving a third request sent by a fourth network element, wherein the third request is configured to update a number of activated PDU sessions, and the third request comprises the first information; and
sending a fourth request to the second network element, wherein the fourth request comprises the first information.

4. The method of any of claims 1-3, wherein sending the first information to the second network element comprises:
sending the first information to the second network element in a case where a group number of terminals registered with a network slice of the first network element reaches a maximum group number of terminals registered with the network slice; and/or
sending the first information to the second network element in a case where a group number of PDU sessions in a network slice of the first network element reaches a maximum group number of PDU sessions in the network slice.

5. The method of claim 2, further comprising:
receiving a first response corresponding to the second request and sent by the second network element, wherein the first response comprises second information, and the second information is configured to update a maximum number of terminals registered with a network slice of the first network element.

6. The method of claim 3, further comprising:
receiving a second response corresponding to the fourth request and sent by the second network element, wherein the second response comprises third information, and the third information is configured to update a maximum number of PDU sessions in a network slice of the first network element.

7. The method of any of claims 1-6, further comprising:
sending fourth information to the second network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

8. The method of claim 7, wherein sending the fourth information to the second network element comprises:
sending the fourth information to the second network element according to a subscription request from the second network element, wherein the subscription request is configured to subscribe the remaining quota or the used quota in the NSAC quota from the first network element.

9. The method of any of claims 1-8, wherein
the first network element is a local network slice admission control function (NSACF) network element, and the second network element is a primary NSACF network element;
the third network element is an access and mobility management function (AMF) network element, and the fourth network element is a session management function (SMF) network element.

10. The method of claim 1, further comprising one of:
determining the group identifier based on local configuration information and/or operations, administration and maintenance (OAM) configuration information of the first network element;
receiving the group identifier sent by a fifth network element.

11. The method of any of claims 1-10, wherein the group identifier is configured to identify at least one of:
a service group associated with the terminal requesting registration;
an application group associated with the terminal requesting registration;
a service group associated with the PDU session requesting activation; or
an application group associated with the PDU session requesting activation.

12. An information processing method, performed by a second network element, comprising:
receiving first information sent by a first network element, wherein the first information is configured to indicate the second network element to perform network slice admission control (NSAC) on a terminal requesting registration or a packet data unit (PDU) session requesting activation, and wherein the first information comprises a group identifier associated with the terminal or the PDU session.

13. The method of claim 12, wherein receiving the first information sent by the first network element comprises at least one of:
receiving a second request comprising the first information sent by the first network element, wherein the second request is sent based on a first request comprising the first information from a third network element, and the first request is configured to update a number of registered terminals; or
receiving a fourth request comprising the first information sent by the first network element, wherein the fourth request is sent based on a third request comprising the first information from a fourth network element, and the third request is configured to update a number of activated PDU sessions.

14. The method of claim 13, further comprising at least one of:
sending a first response corresponding to the second request to the first network element according to a global maximum number of registered terminals and the first information; or
sending a second response corresponding to the fourth request to the first network element according to a global maximum number of PDU sessions and the first information.

15. The method of claim 14, wherein
the first response comprises second information, and the second information is configured to update a maximum number of terminals registered with a network slice of the first network element; and/or
the second response comprises third information, and the third information is configured to update a maximum number of PDU sessions in a network slice of the first network element.

16. The method of claim 14, further comprising:
determining a reserved quantity in the global maximum number of registered terminals or the global maximum number of PDU sessions, wherein the reserved quantity is one of:
a terminal quota of a reserved NSAC associated with the group identifier;
a PDU session quota of a reserved NSAC associated with the group identifier; or
a group quota of a reserved NSAC, wherein the group quota is associated with a terminal group or a PDU session identified by the group identifier.

17. The method of any of claims 12-16, further comprising:
receiving fourth information sent by the first network element, wherein the fourth information indicates a remaining quota or a used quota in an NSAC quota allocated by the second network element to the first network element, and the NSAC quota indicates at least one of a maximum group number of terminals registered with a network slice of the first network element or a maximum group number of PDU sessions in the network slice of the first network element.

18. The method of claim 17, further comprising:
sending a subscription request to the first network element, wherein the subscription request is configured to subscribe the remaining quota or the used quota in the NSAC quota from the first network element.

19. The method of claim 17 or 18, further comprising:
updating the NSAC quota according to the remaining quota or the used quota in the NSAC quota.

20. The method of claim 12, wherein
the group identifier is determined by the first network element based on local configuration information and/or operations, administration and maintenance (OAM) configuration information of the first network element; or
the group identifier is received by the first network element from a fifth network element.

21. The method of any of claims 12-20, wherein the group identifier is configured to identify at least one of:
a service group associated with the terminal requesting registration;
an application group associated with the terminal requesting registration;
a service group associated with the PDU session requesting activation; or
an application group associated with the PDU session requesting activation.

22. An information processing method, performed by a third network element, comprising:
sending first information to a first network element, wherein the first information is configured to indicate a second network element to perform network slice admission control (NSAC) on a terminal requesting registration, and wherein the first information comprises a group identifier associated with the terminal.

23. The method of claim 22, wherein sending the first information to first network element comprises:
sending a first request comprising the first information to the first network element, wherein the first request is configured to update a number of registered terminals.

24. The method of claim 22 or 23, wherein the group identifier is determined by the third network element based on at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
group information in a context of the terminal.

25. The method of any of claims 22-24, wherein the group identifier is configured to identify at least one of:
a service group associated with the terminal requesting registration; or
an application group associated with the terminal requesting registration.

26. An information processing method, performed by a fourth network element, comprising:
sending first information to a first network element, wherein the first information is configured to indicate a second network element to perform network slice admission control (NSAC) on a packet data unit (PDU) session requesting activation, and wherein the first information comprises a group identifier associated with the PDU session.

27. The method of claim 26, wherein sending the first information to the first network element comprises:
sending a third request comprising the first information to the first network element, wherein the third request is configured to update a number of activated PDU sessions.

28. The method of claim 26 or 27, wherein the group identifier is determined by the fourth network element based on at least one of:
local configuration information;
operations, administration and maintenance (OAM) configuration information;
unified data management (UDM) subscription information;
indication information of extended reality (XR) multimodal service capabilities sent by the terminal;
group information related to terminal identification; or
indication information of XR applications or XR service capabilities of the terminal.

29. The method of any of claims 26-28, wherein the group identifier is configured to identify at least one of:
a service group associated with the PDU session requesting activation; or
an application group associated with the PDU session requesting activation.

30. A first network element, comprising:
a sending module, configured to send first information to a second network element, wherein the first information is configured to indicate the second network element to perform network slice admission control (NSAC) on a terminal requesting registration or a packet data unit (PDU) session requesting activation, and wherein the first information comprises a group identifier associated with the terminal or the PDU session.

31. A second network element, comprising:
a receiving module, configured to receive first information sent by a first network element, wherein the first information is configured to indicate the second network element to perform network slice admission control (NSAC) on a terminal requesting registration or a packet data unit (PDU) session requesting activation, and wherein the first information comprises a group identifier associated with the terminal or the PDU session.

32. A third network element, comprising:
a sending module, configured to send first information to a first network element, wherein the first information is configured to indicate a second network element to perform network slice admission control (NSAC) on a terminal requesting registration, and wherein the first information comprises a group identifier associated with the terminal.

33. A fourth network element, comprising:
a sending module, configured to send first information to a first network element, wherein the first information is configured to indicate a second network element to perform network slice admission control (NSAC) on a packet data unit (PDU) session requesting activation, and wherein the first information comprises a group identifier associated with the PDU session.

34. A communication system, comprising:
a first network element, configured to implement the information processing method of any of claims 1-11;
a second network element, configured to implement the information processing method of any of claims 12-21;
a third network element, configured to implement the information processing method of any of claims 22-25; and
a fourth network element, configured to implement the information processing method of any of claims 26-29.

35. A communication device, comprising:
one or more processors;
wherein the processor is configured to call instructions to cause the communication device to implement the information processing method of any of claims 1-11, or claims 12-21, or claims 22-25, or claims 26-29.

36. A storage medium, storing instructions than, when run on a communication device, cause the communication device to implement the information processing method of any of claims 1-11, or claims 12-21, or claims 22-25, or claims 26-29.
